# EUROPÄISCHE PATENTANMELDUNG

(11) **EP 4 553 014 A1**
(43) Veröffentlichungstag der Anmeldung: **14.05.2025**
(21) Anmeldenummer: 24207104.1
(22) Anmeldetag: 17.10.2024
(51) Int. Cl.: B65G 47/90, B25J 15/00, B65G 59/00, B65G 59/02, B65H 3/32

(54) **GREIFERKOPF UND VERFAHREN ZUR HANDHABUNG VON VERPACKUNGSZUSCHNITTEN**

(30) Priorität: 08.11.2023 DE 102023130970
(71) Anmelder: KRONES Aktiengesellschaft, 93073 Neutraubling (DE)
(72) Erfinder: PEUTL, August, 93073 Neutraubling (DE); WAGNER, Martin, 93073 Neutraubling (DE); HACK, Andreas, 93073 Neutraubling (DE); GRUENDL, Rudolf, 93073 Neutraubling (DE)
(74) Vertreter: Benninger Patentanwaltskanzlei

(57) **Zusammenfassung**

Es ist ein Greiferkopf (10) zum Handhaben von Verpackungszuschnitten offenbart.

Der Greiferkopf (10) umfasst eine obere Greifeinheit (17) und eine untere Greifeinheit (19), die zum gemeinsamen klemmenden Erfassen jeweils mehrerer Verpackungszuschnitte von einem Stapel (50) mit einer Vielzahl an Verpackungszuschnitten ausgebildet sind. Weiter umfasst der Greiferkopf (10) eine Trenneinheit, die zum Anheben von Außenkanten jeweiliger zum klemmenden Erfassen vorgesehener Verpackungszuschnitte ausgebildet ist.

Die Trenneinheit umfasst zum Anheben der Außenkanten einen Linearaktuator (16), welcher derart angeordnet ist, dass seine geradlinige Hebeachse gegenüber einer Kontaktfläche der unteren Greifeinheit (19) geneigt ist, wenn die Trenneinheit (18) über den Linearaktuator (16) die Außenkanten der jeweiligen Verpackungszuschnitte anhebt.

## Beschreibung

Die vorliegende Erfindung betrifft einen Greiferkopf und ein Verfahren zur Handhabung von Verpackungszuschnitten. Zudem betrifft die Erfindung ein Verpackungssystem.

Um Artikel mit Verpackungszuschnitten verpacken zu können, ist es notwendig, dass die jeweiligen Verpackungszuschnitte zunächst gehandhabt, hierbei von einem Stapel abgenommen und an einen vorgegebenen Zielort verbracht werden.

Ein solcher Zielort kann bspw. eine Verpackungsmaschine sein, welche Artikel mit den jeweiligen Verpackungszuschnitten verpackt. Eine Verpackungsmaschine kann bereits eine größere Menge an Verpackungszuschnitten aufnehmen, auf welche sie zum Verpacken von Artikeln zurückgreift. Damit der Vorrat nach einer gewissen Zeit nicht erschöpft ist, werden der Verpackungsmaschine regelmäßig neue Verpackungszuschnitte übergeben. Hierfür finden in der Praxis Manipulatoren Verwendung, die über einen Greiferkopf aufeinanderfolgend jeweils mehrere Verpackungszuschnitte von einem Stapel abnehmen können und sodann der jeweiligen Verpackungsmaschine übergeben.

Ein Abnehmen von Verpackungszuschnitten über einen Greiferkopf kann mit Problemen verbunden sein, da die in gestapelter Form aufeinanderliegenden einzelnen Verpackungszuschnitte nur unzureichend klemmend erfasst werden können, um diese nachfolgend zur Verpackungsmaschine zu verbringen. Es kann bei einer jeweiligen klemmenden Entgegennahme bereits nicht vollständig ausgeschlossen werden, dass einzelne Verpackungszuschnittes des Stapels bei einer Entgegennahme vom Greiferkopf gebogen oder beschädigt werden. Auch kann nicht vollständig ausgeschlossen werden, dass sich flächige Verpackungszuschnitte ungewollt vom Greiferkopf lösen, nachdem diese nur unzureichend über den jeweiligen Greiferkopf klemmend erfasst wurden.

Weiter besitzen aus dem Stand der Technik bekannte Manipulatoren, welche Verpackungszuschnitte von einem Stapel entgegennehmen und einer Verpackungsmaschine übergeben, häufig eine geringe Flexibilität bei der Handhabung von Verpackungszuschnitten mit unterschiedlichen Formaten. In der Regel muss ein Greiferkopf des jeweiligen Manipulators ausgetauscht werden, wenn zeitlich aufeinanderfolgend Verpackungszuschnitte mit unterschiedlichen Formaten von einer Palette entgegengenommen und einer Verpackungsmaschine übergeben werden sollen.

Eine Aufgabe der Erfindung kann somit darin gesehen werden, eine Möglichkeit bereitzustellen, mit welcher flächige Verpackungszuschnitte sicher und ohne oder mit reduziertem Risiko einer Beschädigung von einem Stapel aufgenommen und gehandhabt werden können. Weiter soll eine Möglichkeit bereitgestellt werden, mit welcher Verpackungszuschnitte mit unterschiedlichen Formaten einfach und unkompliziert entgegengenommen und gehandhabt werden können.

Die obigen Aufgaben werden mit den Gegenständen gelöst, welche die Merkmale in den unabhängigen Ansprüchen umfassen. Weitere vorteilhafte Ausgestaltungen werden durch die Unteransprüche beschrieben.

Die Erfindung betrifft einen Greiferkopf zum Handhaben von Verpackungszuschnitten. Bei den Verpackungszuschnitten kann es sich bspw. um Verpackungszuschnitte handeln, die zumindest bereichsweise oder sogar vollständig aus zellulosehaltigem Material gebildet sind. In weiteren Ausführungsformen können die Verpackungszuschnitte zumindest bereichsweise oder sogar vollständig aus Kunststoff gebildet sein. Auch ist denkbar, dass die Verpackungszuschnitte zumindest bereichsweise oder sogar vollständig aus Aluminium gebildet sind. Ergänzend oder alternativ zu den erwähnten Materialien können die Verpackungszuschnitte Laschen besitzen, die in Richtung nach oben gefaltet werden können. Auch kann es sich bei einem jeweiligen Verpackungszuschnitt um ein sogenanntes PAD handeln, welches eine plane Aufstandsfläche für mehrere Artikel bereitstellt.

Der Greiferkopf umfasst eine obere Greifeinheit und eine untere Greifeinheit, die zum gemeinsamen klemmenden Erfassen jeweils mehrerer Verpackungszuschnitte von einem Stapel mit einer Vielzahl an Verpackungszuschnitten ausgebildet sind. Die oberer Greifeinheit und die untere Greifeinheit können derart ausgebildet sein, dass die obere Greifeinheit und die untere Greifeinheit eine Zustellbewegung ausführen können, bei welcher die obere Greifeinheit und die untere Greifeinheit ihren relativen Abstand zueinander verkleinern und hierdurch gemeinsam mehrere Verpackungszuschnitte klemmend erfassen.

Der Greiferkopf kann einen Rahmen umfassen, an welchem die obere Greifeinheit und die untere Greifeinheit angeordnet sind. Bei dem Rahmen kann es sich insbesondere um mehrere miteinander verschweißte Blechteile handeln.

Weiter umfasst der Greiferkopf eine Trenneinheit, welche zum Anheben von Außenkanten jeweiliger zum klemmenden Erfassen vorgesehener Verpackungszuschnitte gegenüber auf dem Stapel verbleibenden Verpackungszuschnitten ausgebildet ist, so dass die untere Greifeinheit im Bereich der angehobenen Außenkanten in den Stapel an Verpackungszuschnitten einführbar ist.

Es ist vorgesehen, dass die Trenneinheit zum Anheben der Außenkanten einen Linearaktuator umfasst, welcher derart angeordnet ist, dass seine geradlinige Hebeachse gegenüber einer durch die untere Greifeinheit ausgebildeten Kontaktfläche geneigt ist, wenn die Trenneinheit über den mindestens einen Linearaktuator die Außenkanten der jeweiligen Verpackungszuschnitte anhebt. Durch die Neigung der Hebeachse gegenüber der Kontaktfläche lässt sich mit hoher Wahrscheinlichkeit vermeiden, dass sich Verpackungszuschnitte bei einem Anheben ihrer Außenkanten ungewollt von der Trenneinheit lösen.

Hierdurch können Verpackungszuschnitte nachfolgend sicher und ohne oder mit reduziertem Risiko einer Beschädigung von dem Stapel aufgenommen und gehandhabt werden. Zudem können mittels der Trenneinheit und der beschriebenen Hebeachse Verpackungszuschnitte mit unterschiedlichen Formaten einfach und unkompliziert entgegengenommen und gehandhabt werden.

Es ist nicht zwingend notwendig, dass der mindestens eine Linearaktuator angesteuert wird, um die Außenkanten der jeweiligen Verpackungszuschnitte anzuheben. In diversen Ausführungsformen kann es sein, dass der Greiferkopf kraftbeaufschlagt gegen die jeweiligen klemmend entgegenzunehmenden Verpackungszuschnitte geführt wird, wodurch die jeweiligen klemmend entgegenzunehmenden Verpackungszuschnitte einen Kolben des mindestens einen Linearaktuators entlang der geradlinigen Hebeachse bewegen und die Außenkanten der jeweiligen klemmend entgegenzunehmenden Verpackungszuschnitte über die Trenneinheit angehoben werden.

Der Greiferkopf kann derart ausgebildet sein, dass eine Kraft, mit welcher der Kolben des mindestens einen Linearaktuators den jeweiligen klemmend entgegenzunehmenden Verpackungszuschnitten gegenhält, einstellbar ist. Sofern es sich bei dem mindestens einen Linearaktuator um mindestens einen Pneumatikzylinder handelt, kann es sein, dass ein Arbeitsdruck des mindestens einen Pneumatikzylinders über eine Steuer- und/oder Regeleinrichtung des Greiferkopfes einstellbar ist.

In diversen Ausführungsformen kann es sich somit bei dem mindestens einen Linearaktuator um mindestens einen Pneumatikzylinder handeln. Die Erfindung ist jedoch nicht hierauf beschränkt, so dass es sich in weiteren Ausführungsformen bei dem mindestens einen Linearaktuator bspw. auch um mindestens einen elektrischen Linearmotor bzw. um mindestens einen elektromagnetischen Direktantrieb handeln kann.

Es kann sein, dass die geradlinige Hebeachse gegenüber der Kontaktfläche um einen Winkel geneigt ist, welcher zwischen 5° und 30°, insbesondere zwischen 10° und 25° und vorzugsweise zwischen 15° und 20° beträgt. Insbesondere kann es hierbei sein, dass die geradlinige Hebeachse gegenüber der Kontaktfläche um einen Winkel geneigt ist, welcher im Wesentlichen 18° beträgt. Bei solchen Ausführungsformen lässt sich das Risiko weiter reduzieren, dass sich Verpackungszuschnitte während des Anhebens ihrer Außenkanten ungewollt von der Trenneinheit lösen. Das Aufnehmen und klemmende Erfassen von Verpackungszuschnitten wird durch die beschriebenen Winkel weiter verbessert.

Die obere Greifeinheit kann wenigstens zwei parallel zueinander orientierte Gabelzinken umfassen. Auch kann es sein, dass die obere Greifeinheit als Formteil ausgebildet ist, welches zum gemeinsamen klemmenden Erfassen jeweils mehrerer Verpackungszuschnitte von einem Stapel mit der unteren Greifeinheit zusammenwirkt. Bei dem Formteil kann es sich bspw. um ein Blechteil oder um ein weiteres Teil handeln, das eine plane Klemmfläche für die jeweiligen klemmend zu erfassenden mehreren Verpackungszuschnitte bereitstellt.

Alternativ oder ergänzend hierzu kann es sein, dass die untere Greifeinheit wenigstens zwei parallel zueinander orientierte Gabelzinken umfasst. Auch hierbei ist denkbar, dass die untere Greifeinheit als Formteil ausgebildet ist, welches zum gemeinsamen klemmenden Erfassen jeweils mehrerer Verpackungszuschnitte von einem Stapel mit der oberen Greifeinheit zusammenwirkt und die vorherig bereits erwähnte Kontaktfläche für Verpackungszuschnitte bereitstellt. Sofern die untere Greifeinheit wenigstens zwei parallel zueinander orientierte Gabelzinken umfasst, können die wenigstens zwei parallel zueinander orientierten Gabelzinken die vorherig bereits erwähnte Kontaktfläche aufweisen bzw. die vorherig bereits erwähnte Kontaktfläche ausbilden.

Weiter kann es sein, dass die unterer Greifeinheit zwei äußere Gabelzinken und zwei innere Gabelzinken umfasst, wobei die zwei äußeren Gabelzinken und/oder die zwei inneren Gabelzinken derart verstellbar sind, dass die zwei äußeren Gabelzinken mit den zwei inneren Gabelzinken in eine gemeinsame Ebene gebracht werden können. Alternativ oder ergänzend hierzu kann es sein, dass die zwei äußeren Gabelzinken entlang ihrer jeweiligen Längsachse und relativ zu dem vorherig bereits erwähnten Rahmen des Greiferkopfes verstellbar sind.

Bewährt haben sich Ausführungsformen, bei denen die untere Greifeinheit wenigstens vier parallel zueinander orientierte Gabelzinken umfasst, wobei zwei innere Gabelzinken der wenigstens vier parallel zueinander orientierten Gabelzinken derart verstellbar sind, dass die zwei inneren Gabelzinken in eine erste Position gebracht werden können, in welcher sich die zwei inneren Gabelzinken mit den zwei äußeren Gabelzinken in einer gemeinsamen Ebene befinden und in eine zweite Position gebracht werden können, bei welcher die zwei inneren Gabelzinken diese Ebene verlassen haben.

Der Greiferkopf kann mindestens einen Aktor umfassen, über den die zwei inneren Gabelzinken aus der ersten Position in die zweite Position überführbar sind. Da sich die zwei inneren Gabelzinken und die zwei äußeren Gabelzinken in der ersten Position in einer gemeinsamen Ebene befinden, können über den Greiferkopf aufgenommene Verpackungszuschnitte hierbei sowohl über die zwei inneren Gabelzinken als auch über die zwei äußeren Gabelzinken getragen werden. In der Praxis kann es sein, dass mittels desselben Greiferkopfes auch Verpackungszuschnitte aufgenommen werden sollen, die eine kleine Dimensionierung besitzen.

Die zwei äußeren Gabelzinken sind hierbei ggf. nicht notwendig, um solche Verpackungszuschnitte zu tragen. Die zwei inneren Gabelzinken können sich daher in der zweiten Position befinden, wenn die zwei äußeren Gabelzinken zum Tragen der mehreren Verpackungszuschnitte nicht benötigt werden. Die beschriebene Ausführungsform besitzt somit eine hohe Flexibilität bei der Aufnahme und Handhabung von Verpackungszuschnitten mit unterschiedlichen Abmessungen.

Insbesondere kann der Greiferkopf mindestens eine Gabelzinke umfassen, welche derart ausgebildet ist, dass diese zur Aufnahme einer Palette in eine Palette hineinbewegt werden kann. Hierdurch können auf einfache Art und Weise zusätzlich zu Verpackungszuschnitten auch Paletten gehandhabt werden. Alternativ oder ergänzend hierzu kann der Greiferkopf mindestens ein Klemm- und/oder Greifelement umfassen, über das der Greiferkopf eine Palette halten kann. Bei dem mindestens einen Klemm- und/oder Greifelement kann es sich bspw. um mindestens einen Greiffinger und/oder um mindestens einen Greifhaken handeln. Auch kann es sich bei dem mindestens einen Klemm- und/oder Greifelement um mindestens zwei Klemm- und/oder Greifbacken handeln, die gemeinsam eine jeweilige Palette kraft- und/oder formschlüssig entgegennehmen können.

Auch bei solchen Ausführungsformen können auf einfache Art und Weise zusätzlich zu Verpackungszuschnitten auch Paletten gehandhabt werden.

Ergänzend oder alternativ hierzu kann es sein, dass die untere Greifeinheit wenigstens vier parallel zueinander orientierte Gabelzinken umfasst, wobei zwei äußere Gabelzinken der wenigstens vier parallel zueinander orientierten Gabelzinken über eine Linearführung des Greiferkopfes derart verstellbar sind, dass sich die zwei äußeren Gabelzinken der wenigstens vier parallel zueinander orientierten Gabelzinken entlang ihrer Längsrichtung bewegen können.

Weiter können die oberer Greifeinheit und/oder die untere Greifeinheit an einer Geradführung angeordnet sein, wobei die obere Greifeinheit und/oder die untere Greifeinheit zum klemmenden Erfassen der jeweiligen mehreren Verpackungszuschnitte entlang der Geradführung bewegt ist/sind. Es kann sein, dass der oberen Greifeinheit ein Pneumatikzylinder zugeordnet ist, über den die obere Greifeinheit entlang der Geradführung bewegbar ist. Auch kann es sein, dass der oberen Greifeinheit ein elektrischer Linearantrieb zugeordnet ist, über den die obere Greifeinheit entlang der Geradführung bewegbar ist.

Auch kann es sein, dass die obere Greifeinheit zum klemmenden Erfassen der jeweiligen mehreren Verpackungszuschnitte schwenkbar ausgebildet ist. Die obere Greifeinheit kann ein Blechteil umfassen, welches derart schwenkbar ist, dass es mittels einer Schwenkbewegung zum klemmenden Erfassen der jeweiligen mehreren Verpackungszuschnitte auf einen jeweiligen oberen Verpackungszuschnitt der jeweiligen mehreren Verpackungszuschnitte aufsetzbar ist.

Ausführungsformen, bei denen die obere Greifeinheit schwenkbar ausgebildet ist, haben sich in der Praxis bewährt, um die obere Greifeinheit in eine definierte Warteposition zu überführen. Wenn sich die obere Greifeinheit in einer solchen definierten Warteposition befindet, kann der Greiferkopf ggf. sehr nah an einen Zielort herangeführt werden, an welchen der Greiferkopf nachfolgend die aufgenommenen Verpackungszuschnitte übergibt. Die Handhabung und insbesondere die Übergabe von Verpackungszuschnitten an einen vorgegebenen Zielort lässt sich somit weiter verbessern, wenn die obere Greifeinheit schwenkbar ausgebildet ist.

In diversen Ausführungsformen kann die Trenneinheit an der unteren Greifeinheit angeordnet sein.

Bewährt haben sich auch Ausführungsformen, bei denen die Trenneinheit an der oberen Greifeinheit angeordnet ist.

Es kann sein, dass die Trenneinheit über einen Schlitten verfügt, an dem der mindestens eine Linearaktuator angeordnet ist, wobei der Schlitten entlang einer Führung des Greiferkopfes zusammen mit dem mindestens einen Linearaktuator geradlinig bewegbar ist. Sofern die Trenneinheit an der unteren Greifeinheit angeordnet ist, kann es hierbei sein, dass die Führung über die untere Greifeinheit des Greiferkopfes bereitgestellt wird. Sofern die Trenneinheit an der oberen Greifeinheit angeordnet ist, kann es hierbei sein, dass die Führung über die obere Greifeinheit des Greiferkopfes bereitgestellt wird.

Bei solchen Ausführungsformen kann es sein, dass der Greiferkopf über wenigstens einen Aktuator sowie über einen Zahnriemen oder über eine Spindel verfügt, wobei der Schlitten mittels des wenigstens einen Aktuators über den Zahnriemen oder über die Spindel entlang der Führung zusammen mit dem mindestens einen Linearaktuator geradlinig bewegbar ist.

Auch kann es sein, dass die Trenneinheit über einen Anschlag verfügt, der über den Linearaktuator bewegbar und zum bündigen Ausrichten von Außenkanten der zum jeweiligen klemmenden Erfassen vorgesehenen Verpackungszuschnitte ausgebildet ist. Der Anschlag kann eine Kontaktfläche für die jeweiligen zum klemmenden Erfassen vorgesehenen Verpackungszuschnitte ausbilden, welche Kontaktfläche elastisch nachgiebig ist. Hierdurch kann ein Risiko reduziert werden, dass Verpackungszuschnitte bei einem Oberflächenkontakt mit dem Anschlag ungewollt beschädigt werden.

Der Anschlag kann derart über den Linearaktuator bewegbar sein, so dass der Anschlag während des Anhebens der Außenkanten eine in Gegenrichtung der Außenkanten orientierte Neigungsbewegung ausführt. Hierbei kann der Anschlag einen bis dahin ausgebildeten Oberflächenkontakt zu den Außenkanten zumindest teilweise verlieren. Auch kann es sein, dass der Anschlag mit dem mindestens einen Linearaktuator derart verbunden ist, dass der Anschlag in Gegenrichtung der Außenkanten geneigt ist, wenn der Anschlag die Außenkanten der zum jeweiligen klemmenden erfassen vorgesehenen Verpackungszuschnitte bündig ausrichtet. Die Praxis hat gezeigt, dass sich mit solchen Ausführungsformen ein Risiko weiter reduzieren lässt, dass sich über die Trenneinheit angehobene Verpackungszuschnitte ungewollt von der Trenneinheit lösen.

Weiter kann es sein, dass die Trenneinheit zum Anheben der Außenkanten der jeweiligen zum klemmenden Erfassen vorgesehenen Verpackungszuschnitte einen Vorsprung umfasst. Sofern die Trenneinheit den vorherig erwähnten Anschlag besitzt, kann es sein, dass der Vorsprung über den Anschlag hinausragt. Der Vorsprung kann sich in Richtung seines freien Endes verjüngen und insbesondere in Richtung seines freien Endes spitz zulaufen.

Bei solchen Ausführungsformen kann vermieden werden, dass Verpackungszuschnitte bei einem Eintauchen des Vorsprungs in den Stapel an Verpackungszuschnitten beschädigt werden. Der Vorsprung kann mittels des Linearaktuators entlang der geradlinigen Hebeachse bewegbar sein. Im Rahmen dieser Bewegung können die Außenkanten der zum jeweiligen klemmenden erfassen vorgesehenen Verpackungszuschnitte über den Vorsprung der Trenneinheit angehoben werden.

Auch kann der Greiferkopf mindestens ein Sauginstrument besitzen, welches derart ausgebildet ist, dass der Greiferkopf über das mindestens eine Sauginstrument alternativ zu einer klemmenden Erfassung jeweils mehrerer Verpackungszuschnitte einen Verpackungszuschnitt insbesondere pneumatisch entgegennehmen kann. Beispielsweise kann es sein, dass der Greiferkopf und/oder ein nachfolgend noch beschriebener Manipulator über eine Vakuumerzeugungseinrichtung verfügt, welche mit dem mindestens einen Sauginstrument derart in Wirkverbindung steht, dass das mindestens eine Sauginstrument einen Verpackungszuschnitt via Unterdruck entgegennehmen kann. Bewährt haben sich Ausführungsformen, bei denen eine Position des mindestens einen Sauginstrumentes aktuatorisch verstellbar ist bzw. bei denen der Greiferkopf mindestens einen Aktuator umfasst, über den das mindestens eine Sauginstrument in mehrere unterschiedliche Relativpositionen gegenüber einem Rahmen des Greiferkopfes gebracht werden kann.

Wenn von einem jeweiligen Stapel an Verpackungszuschnitten ein letzter Verpackungszuschnitt zurückbleibt, kann bei solchen Ausführungsformen auch der letzte Verpackungszuschnitt unter Zuhilfenahme des Sauginstrumentes aufgenommen und an einen jeweiligen Zielort gebracht werden. Solche Ausführungsformen haben sich demnach bewährt, um sämtliche Verpackungszuschnitte eines jeweiligen Stapels über den Greiferkopf auf einfache Art und Weise erfassen zu können. Es kann hierbei sein, dass der Greiferkopf genau ein Sauginstrument umfasst. In weiteren Ausführungsformen kann der Greiferkopf bspw. auch genau zwei Sauginstrumente oder genau drei Sauginstrumente umfassen.

Die Erfindung betrifft zudem einen Manipulator, mit dem mindestens ein Greiferkopf zur Handhabung von Verpackungszuschnitten gemäß mindestens einem Ausführungsbeispiel der vorhergehenden Beschreibung verbunden ist.

Bei dem Manipulator kann es sich um einen Knickarmroboter handeln. Der Manipulator kann daher mindestens einen beweglichen Arbeitsarm besitzen, an welchem mindestens einen beweglichen Arbeitsarm der mindestens eine Greiferkopf angeordnet ist. Alternativ hierzu kann es sein, dass es sich bei dem Manipulator um ein Portalsystem oder um einen Deltakinematik-Roboter handelt.

Die Erfindung betrifft zudem ein Verpackungssystem. Das Verpackungssystem umfasst eine Versorgungseinrichtung zur Aufnahme mindestens eines Stapels an flächigen Verpackungszuschnitten, mindestens einen Manipulator gemäß mindestens einem Ausführungsbeispiel der vorhergehenden Beschreibung sowie eine Verpackungsvorrichtung zum Verpacken von Artikeln mit Verpackungszuschnitten. Bei dem Verpackungssystem ist vorgesehen, dass sich die Versorgungseinrichtung und die Verpackungsvorrichtung in einem Arbeitsbereich des mindestens einen Manipulators befinden, wobei der mindestens eine Manipulator zur Übergabe jeweiliger über seinen Greiferkopf jeweils klemmend erfasster Verpackungszuschnitte an die Verpackungsvorrichtung ausgebildet ist.

Die Verpackungsvorrichtung kann zur Verpackung von Artikeln mit Verpackungszuschnitten ausgebildet sein, wobei es sich bei den Artikeln um Getränkebehälter handelt.

Insbesondere kann der Greiferkopf mindestens eine Gabelzinke umfassen, welche derart ausgebildet ist, dass diese zur Aufnahme einer Palette in einen durch die Palette ausgebildeten Freiraum hineinbewegt werden kann. Hierdurch können auf einfache Art und Weise zusätzlich zu Verpackungszuschnitten über den Greiferkopf auch Paletten gehandhabt werden. Wenn in Zusammenhang mit der vorliegenden Patentanmeldung eine Palette beschrieben wird, so kann es sich um eine handelsübliche Euro-Palette handeln.

Weiter betrifft die Erfindung ein Verfahren zur Handhabung von Verpackungszuschnitten über einen Greiferkopf, der eine untere Greifeinheit und eine obere Greifeinheit sowie eine Trenneinheit besitzt. Merkmale, welche vorhergehend bereits zu diversen Ausführungsformen des Greiferkopfes bzw. zu diversen Ausführungsformen des Manipulators bzw. zu diversen Ausführungsformen des erfindungsgemäßen Verpackungssystems beschrieben wurden, können ebenso bei den nachfolgend beschriebenen Ausführungsformen des erfindungsgemäßen Verfahrens vorgesehen sein und werden nicht mehrfach erwähnt.

Es kann sein, dass Verfahren mit mindestens einem Greiferkopf bzw. mit mindestens einem Manipulator bzw. mit mindestens einem Verpackungssystem gemäß mindestens einer der vorherig bereits beschriebenen Ausführungsformen umgesetzt bzw. durchgeführt wird. Ebenso können die nachfolgend zu den Ausführungsformen des erfindungsgemäßen Verfahrens beschriebenen Merkmale bei den vorherig bereits beschriebenen Ausführungsformen des Greiferkopfes bzw. des Manipulators bzw. Verpackungssystem vorgesehen sein, ohne erneut erwähnt zu werden.

Das Verpackungssystem bzw. der Manipulator bzw. der Greiferkopf können zur Durchführung bzw. zur Umsetzung der nachfolgend beschriebenen Ausführungsformen des erfindungsgemäßen Verfahrens ausgebildet sein oder hierfür verwendet werden.

Bei dem Verfahren wird ein Stapel an Verpackungszuschnitten bereitgestellt. Weiter hebt ein Greiferkopf mittels einer durch einen Linearaktuator der Trenneinheit bewirkten Hebebewegung, die entlang einer geradlinigen Hebeachse erfolgt, welche geradlinige Hebeachse gegenüber einer durch die untere Greifeinheit ausgebildeten Kontaktfläche für Verpackungszuschnitte geneigt ist, Außenkanten jeweiliger klemmend entgegenzunehmender Verpackungszuschnitte gegenüber weiteren auf dem Stapel verbleibenden Verpackungszuschnitten an, worauf folgend die untere Greifeinheit im Bereich der angehobenen Außenkanten in den Stapel an Verpackungszuschnitten eingeführt wird.

Weiter erfasst die in den Stapel eingeführte untere Greifeinheit zusammen mit der oberen Greifeinheit hierauf folgend die jeweiligen Verpackungszuschnitte klemmend. Die obere Greifeinheit und die untere Greifeinheit können eine Zustellbewegung ausführen, bei welcher sie ihren relativen Abstand zueinander verkleinern, woraus resultierend die jeweiligen Verpackungszuschnitte über die obere Greifeinheit und die untere Greifeinheit klemmend erfasst werden.

Auch bei dem erfindungsgemäßen Verfahren ist es nicht zwingend notwendig, dass der mindestens eine Linearaktuator angesteuert wird, um die Außenkanten der jeweiligen Verpackungszuschnitte anzuheben. In diversen Ausführungsformen kann es sein, dass der Greiferkopf kraftbeaufschlagt gegen die jeweiligen klemmend entgegenzunehmenden Verpackungszuschnitte geführt wird, wodurch die jeweiligen klemmend entgegenzunehmenden Verpackungszuschnitte einen Kolben des mindestens einen Linearaktuators entlang der geradlinigen Hebeachse bewegen und die Außenkanten der jeweiligen klemmend entgegenzunehmenden Verpackungszuschnitte über die Trenneinheit angehoben werden.

Es kann sein, dass eine Kraft, mit welcher der Kolben des mindestens einen Linearaktuators den jeweiligen klemmend entgegenzunehmenden Verpackungszuschnitten gegenhält, eingestellt wird, bevor die Trenneinheit die Außenkanten der jeweiligen Verpackungszuschnitte anhebt. Sofern es sich bei dem mindestens einen Linearaktuator um mindestens einen Pneumatikzylinder handelt, kann es sein, dass ein Arbeitsdruck des mindestens einen Pneumatikzylinders über eine Steuer- und/oder Regeleinrichtung des Greiferkopfes eingestellt wird, bevor die Trenneinheit die Außenkanten der jeweiligen Verpackungszuschnitte anhebt.

Zudem wird der Greiferkopf zusammen mit den klemmend erfassten Verpackungszuschnitten in Richtung eines vorgegebenen Zielortes bewegt. Es kann ein Manipulator vorgesehen sein, bei dem es sich insbesondere um einen Knickarmroboter handelt, wobei der Manipulator den Greiferkopf zusammen mit den klemmend erfassten Verpackungszuschnitten in Richtung des vorgegebenen Zielortes bewegt.

Bei dem Zielort kann es sich insbesondere um eine Verpackungsvorrichtung handeln, welche zum Verpacken von Artikeln mit Verpackungszuschnitten ausgebildet ist. Die klemmend erfassten Verpackungszuschnitte können vom Greiferkopf an die Verpackungsvorrichtung übergeben werden. Die Verpackungsvorrichtung kann Artikel mit den übergebenen Verpackungszuschnitten verpacken, wobei es sich bei den Artikeln um Getränkebehälter handelt.

Bei dem Verfahren kann der Greiferkopf mindestens eine Gabelzinke umfassen, mit welcher der Greiferkopf eine Palette aufnimmt, von welcher vorhergehend mittels des Greiferkopfes sämtliche Verpackungszuschnitte abgenommen wurden. Hierbei kann ein Manipulator die Palette an einen Zielort überführen, indem der Manipulator den Greiferkopf und die über den Greiferkopf aufgenommene Palette zum Zielort bewegt.

In bevorzugten Ausführungsformen kann es sein, dass die geradlinige Hebeachse des Linearaktuators der Trenneinheit bei der Hebebewegung gegenüber der Kontaktfläche um einen Winkel geneigt ist, welcher zwischen 5° und 30°, insbesondere zwischen 10° und 25° und vorzugsweise zwischen 15° und 20° beträgt.

Auch haben sich Ausführungsformen bewährt, bei denen die geradlinige Hebeachse des Linearaktuators der Trenneinheit bei der Hebebewegung gegenüber der Kontaktfläche um einen Winkel geneigt ist, welcher im Wesentlichen 18° beträgt.

Mit dem Linearaktuator kann ein Anschlag in Verbindung stehen, wobei der Greiferkopf vor einem Anheben der Außenkanten in Richtung der jeweiligen klemmend zu erfassenden Verpackungszuschnitte bewegt wird, so dass der Anschlag mit den noch anzuhebenden Außenkanten in Oberflächenkontakt tritt und die Außenkanten der noch anzuhebenden Verpackungszuschnitte bündig oder im Wesentlichen bündig zueinander ausrichtet.

Weiter ist denkbar, dass der Anschlag mittels einer Rückhubbewegung des Linearaktuators in Gegenrichtung der jeweiligen Verpackungszuschnitte geneigt wird, während die Außenkanten der jeweiligen Verpackungszuschnitte über die Trenneinheit angehoben werden. Auch kann es sein, dass der Anschlag eine in Gegenrichtung der Außenkanten geneigte Orientierung besitzt, während der Anschlag die Außenkanten der noch anzuhebenden Verpackungszuschnitte bündig oder im Wesentlichen bündig zueinander ausrichtet.

Alternativ oder ergänzend hierzu kann es sein, dass der Anschlag derart mit dem Linearaktuator verbunden ist, dass der Anschlag während des bündigen Ausrichtens der jeweiligen Außenkanten in Gegenrichtung der Außenkanten geneigt ist.

In diversen Ausführungsformen kann eine Anschlagwand vorgesehen sein, gegen oder in Richtung welcher Anschlagwand der Anschlag des Greiferkopfes die jeweiligen klemmend zu erfassenden Verpackungszuschnitte drückt und hierbei die Außenkanten der noch anzuhebenden Verpackungszuschnitte bündig oder im Wesentlichen bündig zueinander ausrichtet.

Mit dem Linearaktuator kann ein Vorsprung verbunden sein, welcher Vorsprung zum Anheben der Außenkanten in den Stapel an Verpackungszuschnitten eingeführt wird, so dass die jeweiligen klemmend zu erfassenden Verpackungszuschnitte auf dem Vorsprung aufstehen, worauf folgend der Vorsprung durch eine Rückhubbewegung des Linearaktuators entlang der Hebeachse bewegt wird und hierbei die Außenkanten jeweiliger klemmend entgegenzunehmender Verpackungszuschnitte gegenüber den weiteren auf dem Stapel verbleibenden Verpackungszuschnitten anhebt.

Weiter kann es sein, dass die untere Greifeinheit mindestens zwei innere Gabelzinken und mindestens zwei äußere Gabelzinken umfasst, wobei lediglich die mindestens zwei inneren Gabelzinken im Bereich der angehobenen Außenkanten in den Stapel eingeführt werden und die jeweiligen klemmend zu erfassenden Verpackungszuschnitte aufnehmen, so dass die jeweiligen klemmend zu erfassenden Verpackungszuschnitte vollständig von den mindestens zwei inneren Gabelzinken getragen werden.

Es kann hierbei sein, dass hierauf folgend die mindestens zwei äußeren Gabelzinken mit einem jeweiligen bereits aufgenommenen unteren Verpackungszuschnitt in Anlage gebracht und die jeweiligen klemmend zu erfassenden Verpackungszuschnitte hierdurch sowohl von den mindestens zwei inneren Gabelzinken als auch von den mindestens zwei äußeren Gabelzinken getragen werden. Insbesondere können die mindestens zwei inneren Gabelzinken hierbei aktuatorisch in eine Position gebracht werden, in welcher sich die mindestens zwei äußeren Gabelzinken mit den mindestens zwei inneren Gabelzinken in einer gemeinsamen Ebene befinden.

Es haben sich Ausführungsformen bewährt, bei denen die untere Greifeinheit im Bereich der angehobenen Außenkanten in den Stapel an Verpackungszuschnitten eingeführt wird und die jeweiligen klemmend zu erfassenden Verpackungszuschnitte zumindest teilweise aufnimmt, so dass die jeweiligen klemmend zu erfassenden Verpackungszuschnitte vollständig oder teilweise von der unteren Greifeinheit getragen werden. Weiter kann mindestens ein als Bestandteil des Greiferkopfes ausgebildetes Zentrierelement bewegt werden und die mehreren vollständig oder teilweise aufgenommenen Verpackungszuschnitte bündig zueinander ausrichten.

Der Greiferkopf kann mindestens ein Sauginstrument umfassen, über das der Greiferkopf einen letzten Verpackungszuschnitt des bis dahin ausgebildeten Stapel an Verpackungszuschnitten pneumatisch entgegennimmt, woraufhin der Greiferkopf den pneumatisch aufgenommenen Verpackungszuschnitt in Richtung eines vorgegebenen Zielortes transportiert.

Die Erfindung betrifft zudem ein Verpackungssystem. Das Verpackungssystem umfasst eine Versorgungseinrichtung zur Aufnahme mindestens eines Stapels an flächigen Verpackungszuschnitten. Weiter umfasst das Verpackungssystem einen Manipulator, der einen Greiferkopf mit einer oberen Greifeinheit und einer unteren Greifeinheit besitzt, die zum gemeinsamen klemmenden Erfassen jeweils mehrerer Verpackungszuschnitte von einem über die Versorgungseinrichtung aufgenommenen Stapel an Verpackungszuschnitten ausgebildet sind.

Es ist vorgesehen, dass die Versorgungseinrichtung eine Anschlagwand umfasst, welche derart bewegbar ist, dass die Anschlagswand mittels einer Bewegung mit Verpackungszuschnitten eines durch die Versorgungseinrichtung aufgenommenen Stapels in Oberflächenkontakt bringbar ist, so dass die jeweiligen Verpackungszuschnitte hierbei bündig zueinander ausgerichtet werden. Insbesondere kann die Anschlagwand in horizontaler Richtung bewegbar ausgebildet sein. Alternativ oder ergänzend hierzu kann es sein, dass die Anschlagwand eine Anschlagfläche ausbildet, die zum bündigen Ausrichten von Verpackungszuschnitten ausgebildet ist, indem ein Stapel an Verpackungszuschnitten kraftbeaufschlagt gegen die Anschlagfläche bewegt wird.

Insbesondere kann der Greiferkopf mindestens eine Gabelzinke umfassen, welche derart ausgebildet ist, dass diese zur Aufnahme einer Palette in eine durch die Palette ausgebildeten Freiraum hineinbewegt werden kann. Hierdurch können auf einfache Art und Weise zusätzlich zu Verpackungszuschnitten auch Paletten gehandhabt werden.

Das Verpackungssystem kann eine Verpackungsvorrichtung zum Verpacken von Artikeln mit Verpackungszuschnitten umfassen. Die Verpackungsvorrichtung kann sich in einem Arbeitsbereich des Manipulators befinden, wobei der Manipulator zur Übergabe jeweiliger über seinen Greiferkopf jeweils klemmend erfasster Verpackungszuschnitte an die Verpackungsvorrichtung ausgebildet ist. Die Verpackungsvorrichtung kann zur Verpackung von Artikeln mit Verpackungszuschnitten ausgebildet sein, wobei es sich bei den Artikeln um Getränkebehälter handelt.

Es kann sein, dass die Versorgungseinrichtung einen Niederhalter umfasst, welcher auf einen durch die Versorgungseinrichtung aufgenommenen Stapel an Verpackungszuschnitten aufsetzbar ist, so dass der Stapel klemmend an der Versorgungseinrichtung gehalten wird.

Weiter ist denkbar, dass die Versorgungseinrichtung einen zum Tragen des jeweiligen aufgenommenen Stapels an Verpackungszuschnitten ausgebildeten Drehtisch umfasst, welcher Drehtisch um eine vertikal orientierte Achse drehbar ausgebildet ist.

Auch kann die Versorgungseinrichtung eine Schwenkeinrichtung umfassen, mit welcher der Niederhalter sowie eine für den Stapel an Verpackungszuschnitten vorgesehene Aufstandsfläche der Versorgungseinrichtung derart verbunden sind, dass die Aufstandsfläche und der Niederhalter mittels der Schwenkeinrichtung um eine gemeinsame horizontal orientierte Achse drehbar sind.

Es kann sein, dass die Versorgungseinrichtung eine Schwenkeinrichtung umfasst, mit welcher der Niederhalter sowie der Drehtisch derart verbunden sind, dass der Drehtisch und der Niederhalter mittels der Schwenkeinrichtung um eine gemeinsame horizontal orientierte Achse drehbar sind.

Weiter betrifft die Erfindung ein Verpackungssystem mit einer Versorgungseinrichtung zur Aufnahme mindestens eines Stapels an Verpackungszuschnitten sowie einen Manipulator, der einen Greiferkopf mit einer oberen Greifeinheit und einer unteren Greifeinheit besitzt, die zum gemeinsamen klemmenden Erfassen jeweils mehrerer Verpackungszuschnitte von einem über die Versorgungseinrichtung aufgenommenen Stapel an Verpackungszuschnitten ausgebildet sind. Das Verpackungssystem umfasst zudem eine Ablage.

Es ist vorgesehen, dass die Ablage eine Aufstandsfläche zur Entgegennahme von Verpackungszuschnitten über den Manipulator umfasst und die untere Greifeinheit des Manipulators mindestens zwei parallel zueinander orientierte Gabelzinken umfasst, wobei die Aufstandsfläche wenigstens einen Schlitz ausbildet, dessen Dimensionierung derart ausgebildet ist, dass die mindestens eine Gabelzinke über den wenigstens einen Schlitz durch die Aufstandsfläche hindurchtreten kann.

Insbesondere kann der Greiferkopf mindestens eine Gabelzinke umfassen, welche derart ausgebildet ist, dass diese zur Aufnahme einer Palette in eine durch die Palette ausgebildeten Freiraum hineinbewegt werden kann. Hierdurch können auf einfache Art und Weise zusätzlich zu Verpackungszuschnitten auch Paletten gehandhabt werden.

Das Verpackungssystem kann eine Verpackungsvorrichtung zum Verpacken von Artikeln mit Verpackungszuschnitten umfassen. Die Verpackungsvorrichtung kann sich in einem Arbeitsbereich des Manipulators befinden, wobei der Manipulator zur Übergabe jeweiliger über seinen Greiferkopf jeweils klemmend erfasster Verpackungszuschnitte an die Verpackungsvorrichtung ausgebildet ist. In diversen Ausführungsformen kann es hierbei sein, dass die Verpackungsvorrichtung zur Verpackung von Artikeln mit Verpackungszuschnitten ausgebildet ist, wobei es sich bei den Artikeln um Getränkebehälter handelt. Die Aufstandsfläche kann bei solchen Ausführungsformen als Bestandteil der Verpackungsvorrichtung ausgebildet sein.

Zudem betrifft die Erfindung ein Verpackungssystem, welches eine Versorgungseinrichtung zur Aufnahme mindestens eines Stapels an flächigen Verpackungszuschnitten und einen Manipulator umfasst, wobei der Manipulator einen Greiferkopf mit einer oberen Greifeinheit und einer unteren Greifeinheit besitzt, die zum gemeinsamen klemmenden Erfassen jeweils mehrerer Verpackungszuschnitte von einem über die Versorgungseinrichtung aufgenommenen Stapel an Verpackungszuschnitten ausgebildet sind. Es ist vorgesehen, dass die Versorgungseinrichtung eine Zentriereinrichtung umfasst, über welche flächige Verpackungszuschnitte des mindestens einen Stapel bündig zueinander ausrichtbar sind.

Die Zentriereinrichtung kann mindestens einen Zentrierbalken umfassen, der zum Ausführen einer Zustellbewegung ausgebildet ist, um hierdurch die Verpackungszuschnitte eines über die Versorgungseinrichtung aufgenommenen Stapels bündig zueinander auszurichten.

Weiter kann das Verpackungssystem mindestens drei Zentrierbalken umfassen, die zum Ausführen einer Zustellbewegung ausgebildet sind, um hierdurch die Verpackungszuschnitte eines über die Versorgungseinrichtung aufgenommenen Stapel bündig zueinander auszurichten.

Die mindestens drei Zentrierbalken können mit einem Aktor derart in Verbindung stehen, dass die mindestens drei Zentrierbalken bei einer Betätigung des Aktors gemeinsam in vertikaler Richtung angehoben oder gemeinsam in vertikaler Richtung abgesenkt werden.

Das Verpackungssystem kann eine Verpackungsvorrichtung zum Verpacken von Artikeln mit Verpackungszuschnitten umfassen. Die Verpackungsvorrichtung kann sich in einem Arbeitsbereich des Manipulators befinden, wobei der Manipulator zur Übergabe jeweiliger über seinen Greiferkopf jeweils klemmend erfasster Verpackungszuschnitte an die Verpackungsvorrichtung ausgebildet ist. Die Verpackungsvorrichtung kann zur Verpackung von Artikeln mit Verpackungszuschnitten ausgebildet sein, wobei es sich bei den Artikeln um Getränkebehälter handelt.

Insbesondere kann der Greiferkopf mindestens eine Gabelzinke umfassen, welche derart ausgebildet ist, dass diese zur Aufnahme einer Palette in eine durch die Palette ausgebildeten Freiraum hineinbewegt werden kann. Hierdurch können auf einfache Art und Weise zusätzlich zu Verpackungszuschnitten auch Paletten gehandhabt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1A und 1B zeigen schematische Perspektivansichten einer Ausführungsform eines Greiferkopfes.
Figuren 2A bis 2C zeigen schematische Perspektivansichten einer weiteren Ausführungsform eines Greiferkopfes.
Figuren 3A bis 3C zeigen schematische Perspektivansichten einer Ausführungsform einer Trenneinheit, wie sie als Bestandteil in diversen Ausführungsformen eines erfindungsgemäßen Greiferkopfes sowie zur Umsetzung in diversen Ausführungsformen des erfindungsgemäßen Verfahrens vorgesehen sein kann.
Fig. 4 zeigt eine weitere Ausführungsform einer Trenneinheit, wie sie als Bestandteil in diversen Ausführungsformen eines erfindungsgemäßen Greiferkopfes sowie zur Umsetzung in diversen Ausführungsformen des erfindungsgemäßen Verfahrens vorgesehen sein kann.
Figuren 5A bis 5G zeigen Schritte, wie sie einzeln oder gemäß der in den Figuren 5A bis 5G dargestellten Kombination in diversen Ausführungsformen des erfindungsgemäßen Verfahrens vorgesehen sein können.
Fig. 6 zeigt weitere Aspekte, wie sie in diversen Ausführungsformen des erfindungsgemäßen Verfahrens vorgesehen sein können.
Figuren 7A bis 7C zeigen Schritte, wie sie einzeln oder gemäß der in Figuren 7A bis 7C gezeigten Kombination in weiteren Ausführungsformen des erfindungsgemäßen Verfahrens vorgesehen sein können.
Fig. 8 zeigt eine schematische Perspektivansicht einer Ausführungsform eines erfindungsgemäßen Verpackungssystems.
Fig. 9 zeigt eine schematische Ansicht einer weiteren Ausführungsform eines erfindungsgemäßen Verpackungssystems.
Figuren 10A und 10B zeigen jeweils eine schematische Perspektivansicht einer weiteren Ausführungsform eines erfindungsgemäßen Greiferkopfes.
Figuren 11A und 11B verdeutlichen eine Vorgehensweise bei einer Übergabe von Verpackungszuschnitten an eine Ablage mittels eines Greiferkopfes der Ausführungsform nach Figuren 10A und 10B.
Fig. 12 zeigt eine Ausführungsform einer Ablage, wie sie in diversen Ausführungsformen eines erfindungsgemäßen Verpackungssystems sowie in diversen Ausführungsformen des erfindungsgemäßen Verfahrens vorgesehen sein kann.
Fig. 13 zeigt eine schematische Ansicht einer Ausführungsform eines Verpackungssystem und eine weitere Ausführungsform eines erfindungsgemäßen Greiferkopfes.
Fig. 14 zeigt weitere Details, wie sie in diversen Ausführungsformen des erfindungsgemäßen Verpackungssystems sowie in diversen Ausführungsformen des erfindungsgemäßen Verfahrens vorgesehen sein können.
Fig. 15 zeigt eine schematische Ansicht einer weiteren Ausführungsform eines erfindungsgemäßen Greiferkopfes.
Fig. 16 zeigt eine schematische Ansicht einer weiteren Ausführungsform eines erfindungsgemäßen Verpackungssystems.
Fig. 17 zeigt die Ausführungsform eines Verpackungssystems nach Fig. 16 in Draufsicht.
Figuren 18A bis 18D zeigen eine schematische Ansicht einer weiteren Ausführungsform eines erfindungsgemäßen Verpackungssystems.
Figuren 19A und 19B zeigen ein Ausführungsbeispiel einer Versorgungseinrichtung, wie sie in diversen Ausführungsformen eines erfindungsgemäßen Verpackungssystems und bei der Durchführung diverser Ausführungsformen des erfindungsgemäßen Verfahrens vorgesehen sein kann.
Fig. 20 zeigt im Flussdiagramm einzelne Schritte, wie sie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

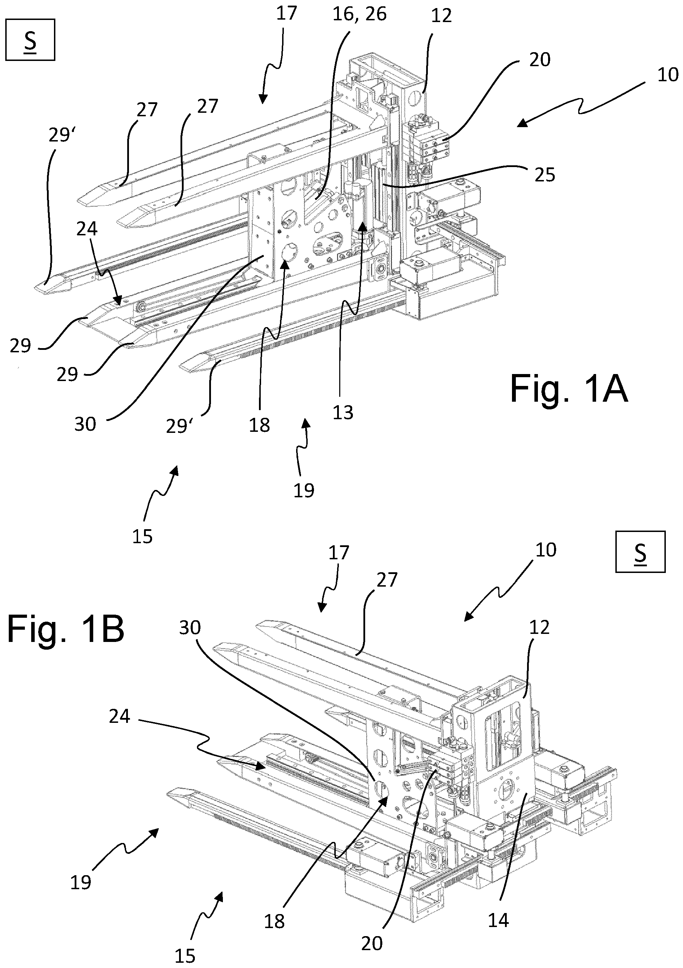

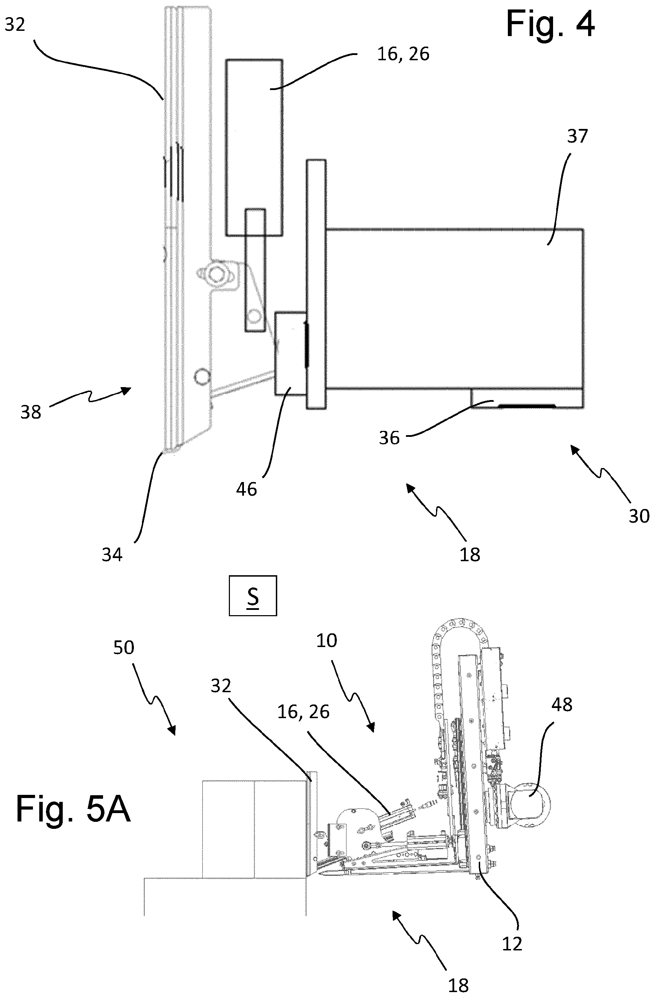

Die Figuren 1A und 1B zeigen schematische Perspektivansichten einer Ausführungsform eines Greiferkopfes 10, der mit einem Manipulator 1 verbunden werden kann. Der Manipulator 1, der einen Greiferkopf 10 gemäß dem Ausführungsbeispiel nach Figuren 1A und 1B tragen kann, ist in der Praxis bspw. als Knickarmroboter 1' ausgebildet. Ein solcher Knickarmroboter 1' besitzt einen Arbeitsarm 48 (vgl. Figuren 5A bis 5G), an dem der Greiferkopf 10 befestigt ist.

Der Greiferkopf 10 umfasst einen Rahmen 12, bei dem es sich vorliegend um ein dünnwandiges, verschweißtes Blech-Biegeteil aus Edelstahl oder Aluminium handeln kann. Als weitere denkbare Werkstoffe können für den Rahmen 12 bspw. auch verzinkter Stahl, Titan, Leichtbauwerkstoffe, Faserverbundwerkstoffe und/oder Werkstoffe vorgesehen sein. Auch kann der Rahmen 12 in diversen Ausführungsformen im dreidimensionalen Druckverfahren hergestellt sein.

Wie es Fig. 1B erkennen lässt, ist an einer Rückseite des Rahmens 12 ein Flansch 14 angeordnet, über den der Greiferkopf 10 an einem Manipulator 1 bzw. an einem Knickarmroboter 1' befestigt werden kann. Bei dem Flansch 14 kann es sich um ein Schnellwechselsystem bzw. um einen Bestandteil eines Schnellwechselsystems handeln. Solche Systeme bilden den Vorteil, dass der Greiferkopf 10 schnell und einfach von einem Arbeitsarm 48 eines Manipulators 1 abgenommen sowie schnell und einfach an einem Arbeitsarm 48 eines Manipulators 1 angeordnet werden kann.

An dem Rahmen 12 ist zudem eine Zange 15 angeordnet, die eine obere Greifeinheit 17 und eine untere Greifeinheit 19 umfasst. Die obere Greifeinheit 17 besitzt zwei parallel zueinander orientierte erste Gabelzinken 27. Die untere Greifeinheit 19 besitzt zwei parallel zueinander orientierte innere Gabelzinken 29 und zwei parallel zueinander orientierte äußere Gabelzinken 29'.

Der Greiferkopf 10 umfasst Mittel zum Einstellen einer Ausrichtung bzw. Neigung der inneren Gabelzinken 29 und der ersten Gabelzinken 27 entlang ihrer jeweiligen Längsachse. Hierdurch können für Verpackungszuschnitte vorgesehene Kontaktflächen der inneren Gabelzinken 29 parallel zu Kontaktflächen der ersten Gabelzinken 27 ausgerichtet werden, wodurch ein sicheres Entgegennehmen von Verpackungszuschnitten ermöglicht wird.

Sowohl die obere Greifeinheit 17 als auch die untere Greifeinheit 19 können über einen jeweiligen Pneumatikzylinder 25, von denen in Fig. 1A lediglich ein Pneumatikzylinder 25 zu erkennen ist, entlang des Rahmens 12 in linearer Richtung auf und ab bewegt werden. Wenn sich die obere Greifeinheit 17 und die untere Greifeinheit 19 aufeinander zubewegen, können Verpackungszuschnitte über die obere Greifeinheit 17 und die untere Greifeinheit 19 klemmend erfasst werden.

Wenn die jeweiligen solchermaßen klemmend erfassten Verpackungszuschnitte über den Manipulator 1 bzw. über den Greiferkopf 10 an den jeweiligen Zielort verbracht worden sind, können die untere Greifeinheit 19 und die obere Greifeinheit 17 ihren relativen Abstand vergrößern, wodurch die Verpackungszuschnitte freigegeben werden. Hierzu wird der Pneumatikzylinder 25 erneut betätigt.

Der Greiferkopf 10 bietet eine Möglichkeit, die jeweilige zum Klemmen von Verpackungszuschnitten notwendige Klemmkraft vorzugeben, indem der auf die Pneumatikzylinder 25 wirkende Druck an der Steuer- und/oder Regeleinrichtung 20 eingestellt wird.

Weiter umfasst der Greiferkopf 10 eine Trenneinheit 18, die bei der Ausführungsform nach Figuren 1A und 1B als Bestandteil der unteren Greifeinheit 19 ausgebildet ist. Die Trenneinheit 18 kann, wie es nachfolgend noch beschrieben wird, entlang der inneren Gabelzinken 29 der unteren Greifeinheit 19 verschoben werden, um hierauf eine Außenkante eines unteren zu erfassenden Verpackungszuschnittes anzuheben.

Zur Bewegung der Trenneinheit 18 umfasst der Greiferkopf 10 einen Aktuator 13 und einen Schlitten 30. Der Aktuator 13 kann den Schlitten 30 entlang der inneren Gabelzinken 29 hin und her bewegen.

Zum Anheben der jeweiligen Außenkante des jeweiligen unteren zu erfassenden Verpackungszuschnittes umfasst der Greiferkopf 10 einen Linearaktuator 16, der in Fig. 1A teilweise zu erkennen ist. Bei dem Linearaktuator 16 handelt es sich vorliegend um einen Pneumatikzylinder 26. Der Linearaktuator 16 bzw. der Pneumatikzylinder 26 ist mit dem Schlitten 30 verbunden, so dass der Linearaktuator 16 bzw. der Pneumatikzylinder 26 zusammen mit dem Schlitten 30 entlang der inneren Gabelzinken 29 hin und her bewegt werden.

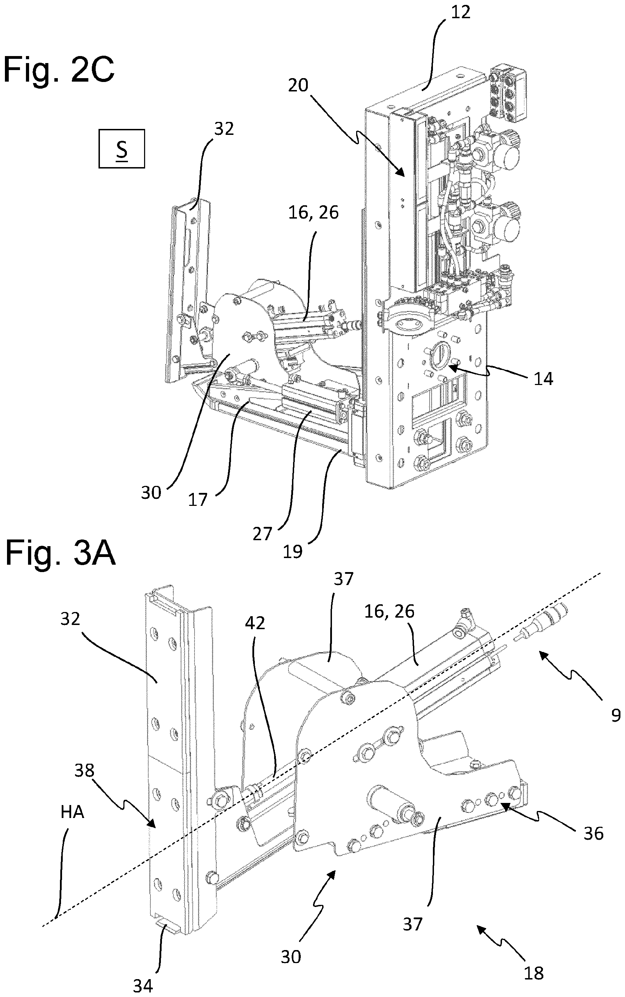

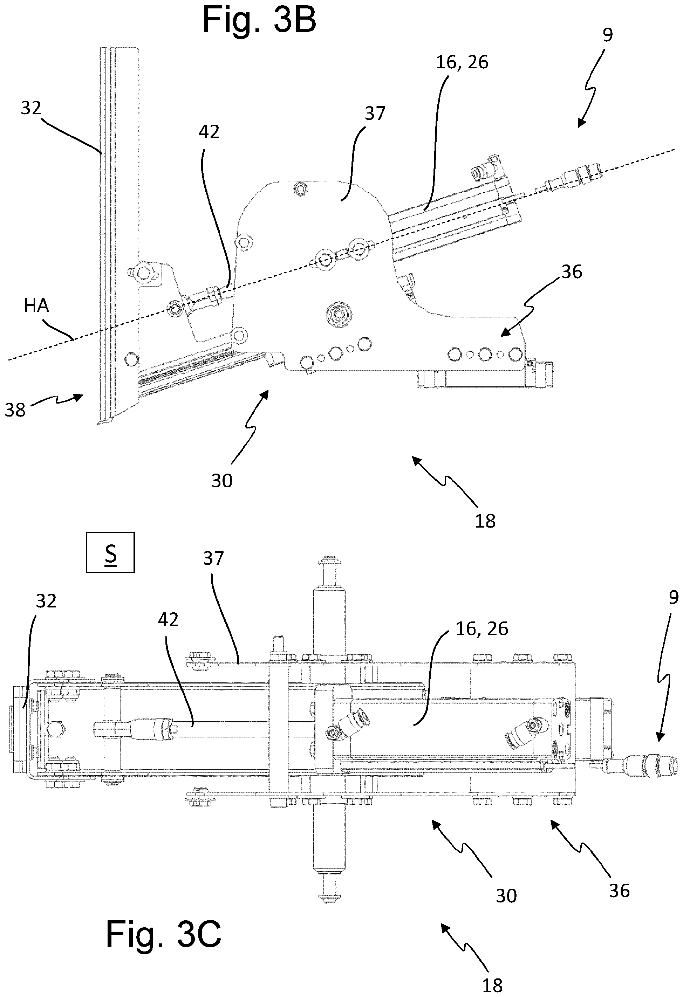

Eine geradlinige Hebeachse HA (vgl. Fig. 3A) des Linearaktuators 16 bzw. des Pneumatikzylinders 26 ist gegenüber einer Kontaktfläche 24 für Verpackungszuschnitte geneigt, wenn die Trenneinheit 18 die jeweilige Außenkante des jeweiligen unteren Verpackungszuschnittes über den Linearaktuator 16 anhebt. Die Kontaktfläche 24 wird durch die untere Greifeinheit 19 bzw. durch die inneren Gabelzinken 29 und durch die äußeren Gabelzinken 29' der unteren Greifeinheit 19 ausgebildet. Sie liegt flächig an dem jeweiligen unteren Verpackungszuschnitt an, wenn die jeweiligen entgegengenommenen Verpackungszuschnitte über die untere Greifeinheit 19 und über die obere Greifeinheit 17 klemmend gehalten sind.

Wie es nachfolgend noch beschrieben wird, haben sich Ausführungsformen bewährt, bei denen die geradlinige Hebeachse HA gegenüber der Kontaktfläche 24 um einen Winkel geneigt ist, welcher zwischen 5° und 30°, insbesondere zwischen 10° und 25° und vorzugsweise zwischen 15° und 20° beträgt. Bei solchen Ausführungsformen kann eine Außenkante eines unteren zu erfassenden Verpackungszuschnittes angehoben werden, wobei gleichzeitig lediglich ein sehr geringes Risiko besteht, dass sich der untere entgegenzunehmende Verpackungszuschnitt von der Trenneinheit 18 ungewollt löst.

Die Figuren 1A und 1B zeigen zudem, dass der Greiferkopf 10 über eine Steuer- und/oder Regeleinrichtung 20 verfügt, über die der Greiferkopf 10 an eine zentrale Steuerung S angebunden werden kann. Über die Steuer- und/oder Regeleinrichtung 20 erfolgt die pneumatische Versorgung bzw. Steuerung des Greiferkopfes 10, wozu die zentrale Steuerung S mehrere Ventile umfasst oder mehrere Ventile betätigen kann. Weiter bildet die Steuer- und/oder Regeleinrichtung 20 eine Schnittstelle für mehrere als Bestandteil des Greiferkopfes 10 ausgebildete Sensoren.

Da der Greiferkopf 10 somit vorzugsweise einzig über die Steuer- und/oder Regeleinrichtung 20 an die zentrale Steuerung S angebunden werden kann, ist es nicht notwendig, eine Vielzahl an Leitungen zur zentralen Steuerung S zu verlegen, um den Greiferkopf 10 betreiben zu können. Die Koppelung des Greiferkopfes 10 erfolgt daher auf einfache bzw. unkomplizierte Art und Weise. Zudem kann ein Wechsel des Greiferkopfes 10 schnell und einfach erfolgen.

In der Praxis haben sich Ausführungsformen bewährt, bei denen die Steuer- und/oder Regeleinrichtung 20 eine Schnittstelle für nahezu sämtliche Steuerelemente bereitstellt, wobei lediglich noch pneumatische und elektrische Versorgungsleitungen sowie eine Datenleitung vom Greiferkopf 10 zu einem Schaltschrank geführt sind.

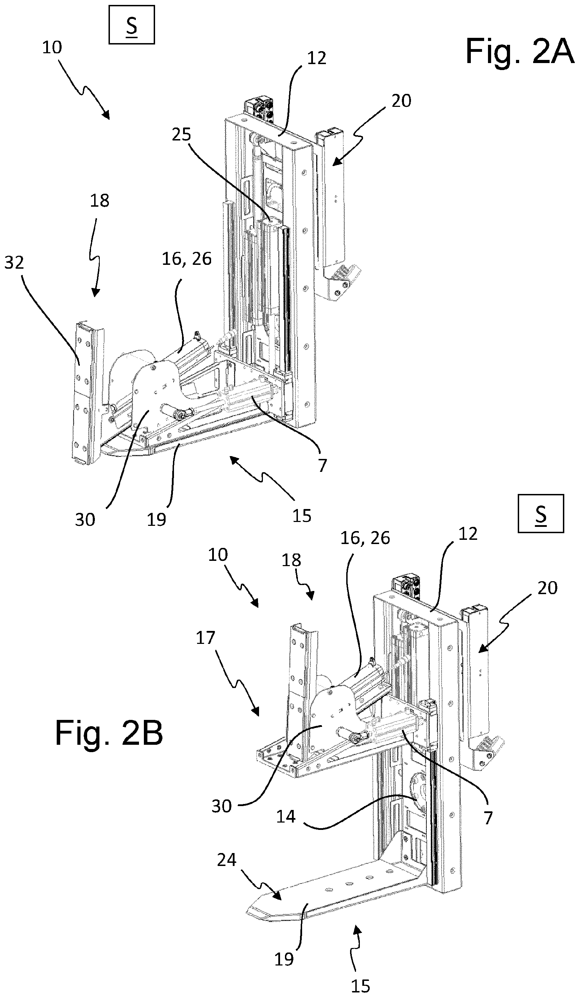

Die Figuren 2A bis 2C zeigen schematische Perspektivansichten einer weiteren Ausführungsform eines Greiferkopfes 10, wie er in diversen Ausführungsformen eines erfindungsgemäßen Manipulators 1 vorgesehen sein kann. Auch die Ausführungsform eines Greiferkopfes 10 nach Figuren 2A bis 2C besitzt eine Zange 15 mit einer oberen Greifeinheit 17 und einer unteren Greifeinheit 19, über welche der Greiferkopf 10 mehrere Verpackungszuschnitte gemeinsam von einem Stapel 50 aufnehmen und klemmend erfassen kann.

Die obere Greifeinheit 17 und die untere Greifeinheit 19 können zueinander ausgerichtet werden, so dass eine zur Entgegennahme von Verpackungszuschnitten vorgesehene Kontaktfläche der oberen Greifeinheit 17 und eine zur Entgegennahme von Verpackungszuschnitten vorgesehene Kontaktfläche 24 der unteren Greifeinheit 19 parallel oder im Wesentlichen parallel zueinander orientiert sind.

Die untere Greifeinheit 19 ist bei der Ausführungsform nach Figuren 2A und 2B ortsfest mit dem Rahmen 12 verbunden. Hingegen kann die obere Greifeinheit 17, wie sich dies aus einer Zusammenschau der Fig. 2A mit Fig. 2B ergibt, über den Pneumatikzylinder 25 entlang dem Rahmen 12 auf und ab bewegt werden.

Die Trenneinheit 18 ist bei der Ausführungsform nach Figuren 2A und 2B an der oberen Greifeinheit 17 angeordnet bzw. als Bestandteil der oberen Greifeinheit 17 ausgebildet und wird somit zusammen mit der oberen Greifeinheit 17 auf und ab bewegt. Auch bei der Ausführungsform nach Figuren 2A bis 2C verfügt die Trenneinheit 18 über einen Schlitten 30, an dem der Linearaktuator 16 angeordnet ist, bei dem es sich um einen Pneumatikyzlinder 26 handelt. Über den auf Verweis mit Bezugsziffer 7 dargestellten Pneumatikzylinder kann der Schlitten 30 zusammen mit dem Linearaktuator 16 entlang der oberen Greifeinheit 19 bewegt werden.

Rückseitig ist an dem Rahmen 12 eine Steuer- und/oder Regeleinrichtung 20 angeordnet, die entsprechend der vorherigen Beschreibung zum Ausführungsbeispiel nach Figuren 1A und 1B mit einer zentralen Steuerung S in Verbindung steht. Die Steuer- und/oder Regeleinrichtung 20 ist insbesondere in Fig. 2C detailliert zu erkennen.

Wie es Fig. 2C zudem zeigt, bildet der Rahmen 12 an seiner Rückseite, welche der Zange 15 abgewandt ist, einen Flansch 14 aus, über den der Greiferkopf 10 an einem Manipulator 1 befestigt werden kann. Der Flansch 14 kann auch bei der Ausführungsform nach Figuren 2a bis 2c als Bestandteil eines Schnellwechselsystem ausgebildet sein.

Ein Vorteil der Ausführungsform nach Figuren 2A bis 2C ist gegenüber der Ausführungsform nach Figuren 1A und 1B darin zu finden, dass sich ein Schwerpunkt des Greiferkopfes 10 näher am Flansch des jeweiligen Manipulators 1 befindet, an dem der Greiferkopf 10 angeordnet ist. Hierdurch kann der Greiferkopf 10 auch für kleinere Manipulatoren 1 verwendet werden.

Mit der Ausführungsform nach Figuren 1A und 1B können sehr geringe Taktzeiten bzw. sehr hohe Taktraten erreicht werden, da die obere Greifeinheit 17 nur um eine kleine Wegstrecke bewegt wird, wenn über den Greiferkopf 10 mehrere Verpackungszuschnitte gemeinsam klemmend erfasst werden.

Die Figuren 3A bis 3C zeigen schematische Perspektivansichten einer Ausführungsform einer Trenneinheit 18, wie sie als Bestandteil in diversen Ausführungsformen eines erfindungsgemäßen Greiferkopfes 10 sowie zur Umsetzung in diversen Ausführungsformen des erfindungsgemäßen Verfahrens 100 (vgl. Fig. 31) vorgesehen sein kann. Die Trenneinheit 18 gemäß der Ausführungsform nach Figuren 3A und 3B ist als Bestandteil des Greiferkopfes 10 der vorherigen Ausführungsbeispiele nach Figuren 1A, 1B sowie nach Figuren 2A bis 2C jeweils entsprechend ausgebildet.

Die Fig. 3A zeigt hierbei nochmals im Detail den Linearaktuator 16, bei dem es sich um einen Pneumatikzylinder 26 handelt. Sollen mittels der Trenneinheit 18 mehrere Verpackungszuschnitte, die zur Entgegennahme über den Greiferkopf 10 vorbestimmt sind, angehoben werden, so befindet sich ein Kolben 42 des Pneumatizylinders 26 hierbei zunächst in einer ausgefahrenen Position.

Mit dem Kolben 42 des Pneumatikzylinders 26 stehen der Anschlag 32 und der Vorsprung 34 in Verbindung. Der jeweilige Manipulator 1 bewegt den Greiferkopf 10 sodann in Richtung der jeweiligen klemmend zu erfassenden Verpackungszuschnitte, wobei der Anschlag 32 mit diesen Verpackungszuschnitten in Oberflächenkontakt gelangt und der Vorsprung 34 in den Stapel an Verpackungszuschnitten eingeführt wird, so dass sich der Vorsprung 34 hierauf unterhalb der Außenkante eines jeweiligen unteren zu erfassenden Verpackungszuschnittes befindet.

Der Kolben 42 des Linearaktuators 16 bzw. des Pneumatikzylinders 26 führt sodann entlang der Hebeachse HA eine Rückhubbewegung durch und hebt hiermit die Außenkante des jeweiligen unteren zu erfassenden Verpackungszuschnittes an. Diese Rückhubbewegung wird bewirkt, indem der Anschlag 32 mit den noch entgegenzunehmenden Verpackungszuschnitten in Oberflächenkontakt gebracht wird und der Greiferkopf 1 zusammen mit der Trenneinheit 18 in Richtung der jeweiligen noch entgegenzunehmenden Verpackungszuschnitte geführt wird.

Die noch entgegenzunehmenden Verpackungszuschnitte treten somit kraftbeaufschlagt mit dem Anschlag 32 in Oberflächenkontakt und bewirken hierdurch eine Rückhubbewegung des Kolbens 42. Ein Druck bzw. Arbeitsdruck des Pneumatikzylinders kann über die vorherig bereits erwähnte Steuer- und/oder Regeleinrichtung 20 eingestellt werden.

Die Hebeachse HA ist während der Hebebewegung gegenüber der Kontaktfläche 24 (vgl. Figuren 1A und 2B) um einen Winkel geneigt, welcher zwischen 15° und 20° beträgt und welcher insbesondere im Wesentlichen 18° beträgt. Hierdurch kann vermieden werden, dass die Außenkante des jeweiligen unteren entgegenzunehmenden Verpackungszuschnittes während des Anhebens von dem Vorsprung 34 abrutscht. Das Anheben dieser Außenkante über die Trenneinheit 18 erfolgt bei dem beschriebenen Winkel der Hebeachse HA mit hoher Zuverlässigkeit.

Zudem zeigen Figuren 3A bis 3C nochmals den als Bestandteil der Trenneinheit 18 ausgebildeten Schlitten 30. Eine Schnittstelle, über welche der Schlitten 30 mit der oberen Greifeinheit 17 bzw. mit der unteren Greifeinheit 19 verbunden ist, wird in Figuren 3A bis 3C auf Verweis mit Ziffer 36 dargestellt. Der Schlitten 30 verfügt über einen Rahmen 37, der aus dünnwandigen und verschweißten Blechteilen aus Edelstahl oder Aluminium gebildet sein kann. In weiteren Ausführungsformen kann der Rahmen 37 auch durch einen Faserverbundwerkstoff gebildet sein.

Der Anschlag 32 besitzt eine rutschhemmende und elastisch nachgiebige Oberfläche 38, um Beschädigungen bei einem Kontakt mit den jeweiligen klemmend zu erfassenden Verpackungszuschnitten zu vermeiden. Der Vorsprung 34 reicht über den Anschlag 32 hinaus, so dass die jeweiligen klemmend zu erfassenden Verpackungszuschnitte über den Vorsprung 34 sicher gehalten werden können. Um eine Beschädigung von Verpackungszuschnitten während des Eintauchens des Vorsprungs 34 in den Stapel 50 an Verpackungszuschnitten zu vermeiden, verjüngt sich der Vorsprung 34 in Richtung seines freien Endes oder läuft sogar in Richtung seines freien Endes spitz zu.

Dem Pneumatikzylinder 26 ist ein Wegsensor 9 zugeordnet, welcher Informationen an die Steuer- und/oder Regeleinrichtung 20 des Greiferkopfes 10 liefert, mit welchen Informationen auf den jeweiligen Hub des Kolbens 42 geschlossen werden kann. Wenn die Trenneinheit 18 über den Anschlag 32 Verpackungszuschnitte bündig zueinander ausrichtet, ist der Anschlag 32 geringfügig in Gegenrichtung dieser jeweiligen Verpackungszuschnitte geneigt.

Die schematische Darstellung der Fig. 4 zeigt eine weitere Ausführungsform einer Trenneinheit 18, wie sie als Bestandteil in diversen Ausführungsformen eines erfindungsgemäßen Greiferkopfes 10 sowie zur Umsetzung in diversen Ausführungsformen des erfindungsgemäßen Verfahrens 100 (vgl. Fig. 31) vorgesehen sein kann.

Auch die Ausführungsform der Trenneinheit 18 nach Fig. 4 umfasst einen Schlitten 30, der einen Rahmen 37 ausbildet. Bei dem Rahmen 37 handelt es sich um dünnwandige, verschweißte Blechteile aus Edelstahl oder Aluminium. Alternativ hierzu kann der Rahmen 37 durch einen Faserverbundwerkstoff ausgebildet sein. Der Anschlag 32 entspricht der vorhergehend bereits in den Figuren 3A bis 3C beschriebenen Ausführungsform und umfasst eine rutschhemmende und elastische Oberfläche 38.

Die Schnittstelle zur oberen Greifeinheit 17 bzw. zur unteren Greifeinheit 19 ist weiterhin auf Verweis mit Ziffer 36 dargestellt. Der Linearaktuator 16, bei dem es sich weiterhin um einen Pneumatikzylinder 26 handelt, unterscheidet sich in der Orientierung und Anordnung von der Ausführungsform einer Trenneinheit 18 nach Figuren 3A bis 3C. Die Hebeachse HA des Pneumatikzylinders 26 ist im Wesentlichen senkrecht gegenüber der vorherig bereits beschriebenen Kontaktfläche (vgl. Fig. 1A) orientiert, wenn die Trenneinheit 18 eine Außenkante eines jeweiligen unteren entgegenzunehmenden Verpackungszuschnittes anhebt. Anstelle des Pneumatikzylinders 26 kann für den Linearaktuator 16 auch ein elektrischer Aktuator oder ein hydraulischer Aktuator verwendet werden.

Die Figuren 5A bis 5G zeigen Schritte, wie sie einzeln oder gemäß der in den Figuren 5A bis 5G dargestellten Kombination in diversen Ausführungsformen des erfindungsgemäßen Verfahrens 100 vorgesehen sein können. Das Verfahren 100 wird mittels eines Greiferkopfes 10 durchgeführt, wie er vorhergehend im Ausführungsbeispiel nach Figuren 2A bis 2C dargestellt und beschrieben wurde.

Der Greiferkopf 10 ist an einem Arbeitsarm 48 eines Manipulators 1 angeordnet. Bei dem Manipulator 1 handelt es sich vorliegend um einen Knickarmroboter 1'. Der Arbeitsarm 48 ist in Figuren 5A bis 5G nur anteilig zu erkennen.

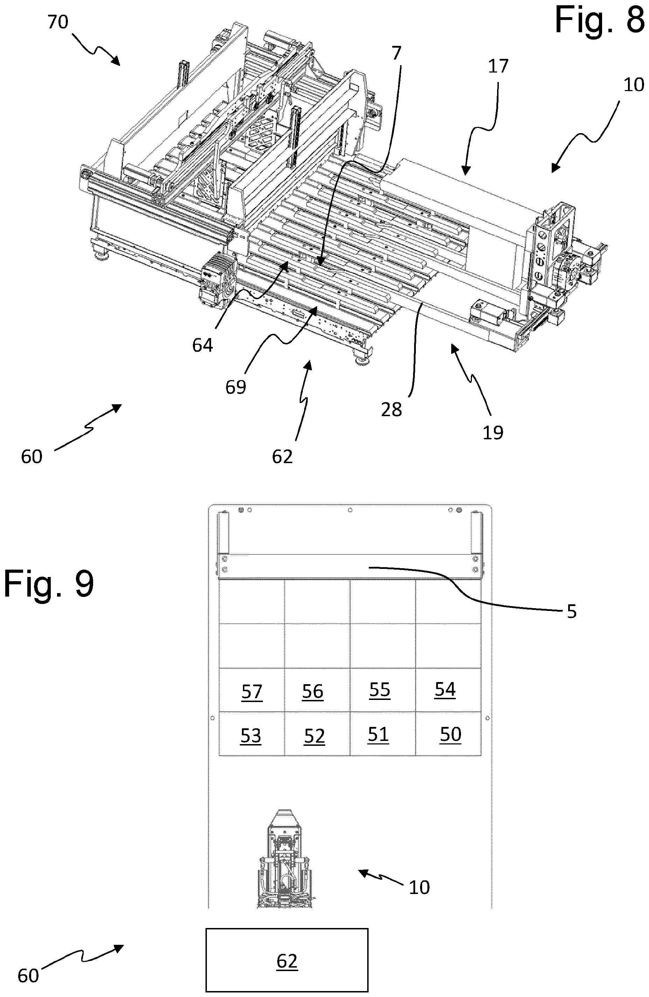

In Fig. 5A wurde der Greiferkopf 10 mittels des Arbeitsarmes 48 in Richtung aufzunehmender Verpackungszuschnitte des Stapels 50 bewegt, so dass der Anschlag 32 mit den jeweiligen aufzunehmenden Verpackungszuschnitten kraftbeaufschlagt in Oberflächenkontakt getreten ist. Hinter den aufzunehmenden Verpackungszuschnitten befindet sich eine Anschlagwand 5, die in Fig. 5A nicht mit dargestellt wurde, jedoch bspw. in Fig. 9 gezeigt wird. Nach einem Kontakt des Anschlags 32 mit den jeweiligen aufzunehmenden Verpackungszuschnitten drückt der Manipulator 1 bzw. der Greiferkopf 10 die aufzunehmenden Verpackungszuschnitte gegen diese Anschlagwand 5, wodurch die jeweiligen aufzunehmenden Verpackungszuschnitte bündig oder im Wesentlichen bündig zueinander ausgerichtet werden.

Zudem wird durch die Bewegung des Greiferkopfes 10 in Richtung der aufzunehmenden Verpackungszuschnitte der Vorsprung 34 in den Stapel 50 eingeführt, so dass in Fig. 5A bereits eine Außenkante eines unteren aufzunehmenden Verpackungszuschnittes auf dem Vorsprung 34 aufliegt. Der Kolben 42 (vgl. Figuren 3A bis 3C) befindet sich in Fig. 5A in einer ausgefahrenen Stellung.

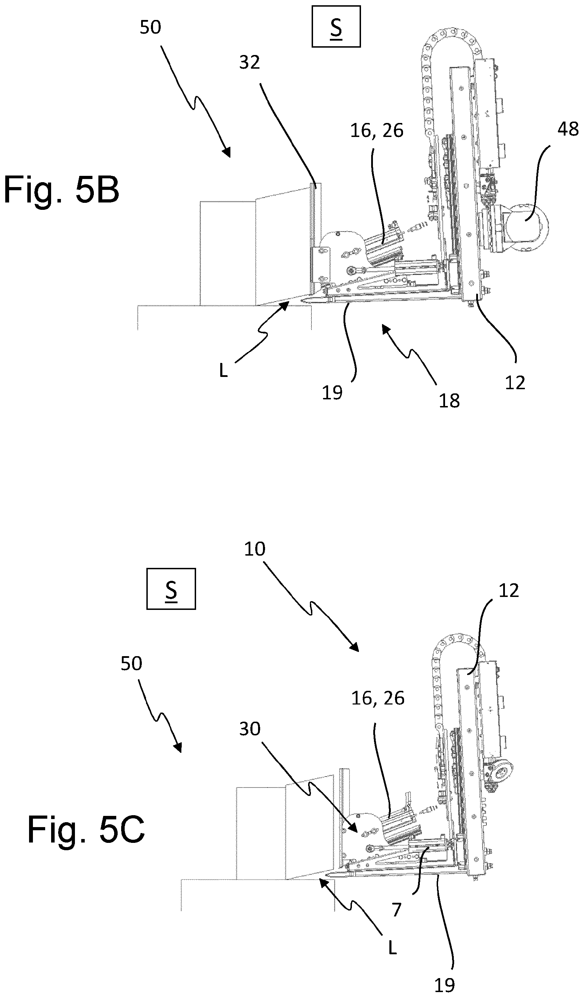

Der Verfahrensschritt nach Fig. 5B folgt auf den Verfahrensschritt nach Fig. 5A. Ausgehend von Fig. 5A führt der Kolben 42 des Pneumatikzylinders 26 eine Rückhubbewegung durch. Die Rückhubbewegung erfolgt aufgrund einer Kraft, mit welchen die aufzunehmenden Verpackungszuschnitte bei einer Bewegung des Greiferkopfes 10, die in Richtung des Stapels 50 orientiert ist, auf den Pneumatikzylinder 26 einwirken. Eine Anpresskraft, mit welcher der Pneumatikzylinder 26 bzw. der Kolben 42 den aufzunehmenden Verpackungszuschnitten hierbei gegenhält, kann an der Steuer- und/oder Regeleinrichtung 20 (vgl. Figuren 1A und 1B sowie Figuren 2A und 2B) eingestellt werden bzw. vorgegeben werden.

Bei einer Bewegung des Rahmens 12 in Richtung des Stapels 50 wird eine jeweilige Außenkante der aufzunehmenden Verpackungszuschnitte über die Trenneinheit 18 gegenüber auf dem Stapel 50 verbleibenden Verpackungszuschnitten angehoben, wodurch eine Lücke L entsteht.

Die Hebeachse HA (vgl. Figuren 3A und 3B) des Pneumatikzylinders 26 ist hierbei gegenüber einer durch die untere Greifeinheit 19 ausgebildeten Kontaktfläche 24 um einen Winkel geneigt, welcher im Wesentlichen 18° beträgt. Zeitgleich mit der Rückhubbewegung wird der Anschlag 32 zusammen mit dem Vorsprung 34 und den auf dem Vorsprung 34 aufstehenden Verpackungszuschnitten in Richtung des Rahmens 12 versetzt und bleibt hierbei vorerst in Oberflächenkontakt mit den Außenkanten der jeweiligen noch klemmend zu erfassenden Verpackungszuschnitte.

Durch das Anheben der Außenkanten entsteht, wie es vorhergehend bereits erwähnt wurde, eine Lücke L, in welche die untere Greifeinheit 19 eintauchen kann. In Fig. 5B befindet sich die untere Greifeinheit 19 bereits in der Lücke L. Wenn die Lücke L gebildet und die untere Greifeinheit 19 entsprechend Fig. 5B in die Lücke L eingetaucht ist, kann der Kolben 42 (vgl. Figuren 3A bis 3C) eine aktive Rückhubbewegung ausführen, wodurch der Anschlag 32 die Verpackungszuschnitte verlässt und der Vorsprung 34 von den Verpackungszuschnitten abgezogen wird. Die Bewegung des Kolbens 42 wird im Verlauf der Rückhubbewegung über den Wegsensor 9 (vgl. Fig. 3A) der Trenneinheit 18 überwacht. Die Rückhubbewegung kann geregelt werden, sofern eine Ist-Position des Kolbens 42 im Rahmen der Rückhubbewegung von einer vorgegebenen Soll-Position abweicht.

Wie es vorhergehend bereits erwähnt wurde, wird die Rückhubbewegung des Kolbens 42 des Pneumatikzylinders 26 zunächst über die Anpresskraft der aufzunehmenden Verpackungszuschnitte bewirkt, wenn der Rahmen 12 in Richtung des Stapels 50 bewegt wird. Hat der Kolben 42 dann eine bestimmte Position erreicht, wird diese bestimmte Position erkannt und die beschriebene aktive Rückhubbewegung für den Kolben 42 bewirkt, wodurch der Anschlag 32 die Verpackungszuschnitte verlässt und der Vorsprung 34 von den Verpackungszuschnitten abgezogen wird.

Da sich die untere Greifeinheit 19 weiterhin in der Lücke L befindet, bleibt die Lücke L erhalten. Die untere Greifeinheit 19 gelangt während oder nach der Rückzugbewegung des Vorsprungs 34 mit dem jeweiligen unteren Verpackungszuschnitt in Kontakt. Die jeweilige klemmend aufzunehmenden Verpackungszuschnitte liegen sodann auf der unteren Greifeinheit 19 auf.

Dieser Verfahrensschritt ist in Fig. 5C gezeigt, wobei der Anschlag 32 über den Pneumatikzylinder 26 bereits zurückgezogen wurde und in Fig. 5C seinen Oberflächenkontakt zu den jeweiligen Verpackungszuschnitten verloren hat, welche jeweiligen Verpackungszuschnitte nachfolgend über den Greiferkopf 10 noch klemmend erfasst werden.

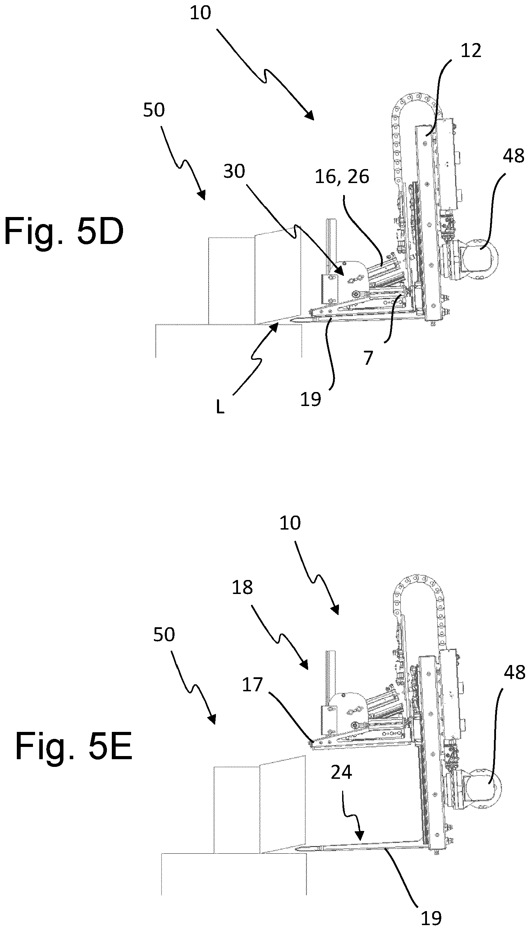

Wie es sich aus einer Zusammenschau der Fig. 5C mit Fig. 5D ergibt, führt auch der Pneumatikzylinder 7 eine Rückhubbewegung aus, wodurch der Schlitten 30 mitsamt dem Pneumatikzylinder 26, dem Anschlag 32 und dem Vorsprung 34 in Richtung des Rahmens 12 zurückgezogen wird. Die zum klemmenden Erfassen vorgesehenen Verpackungszuschnitte befinden sich während der Rückhubbewegung weiterhin auf der unteren Greifeinheit 19.

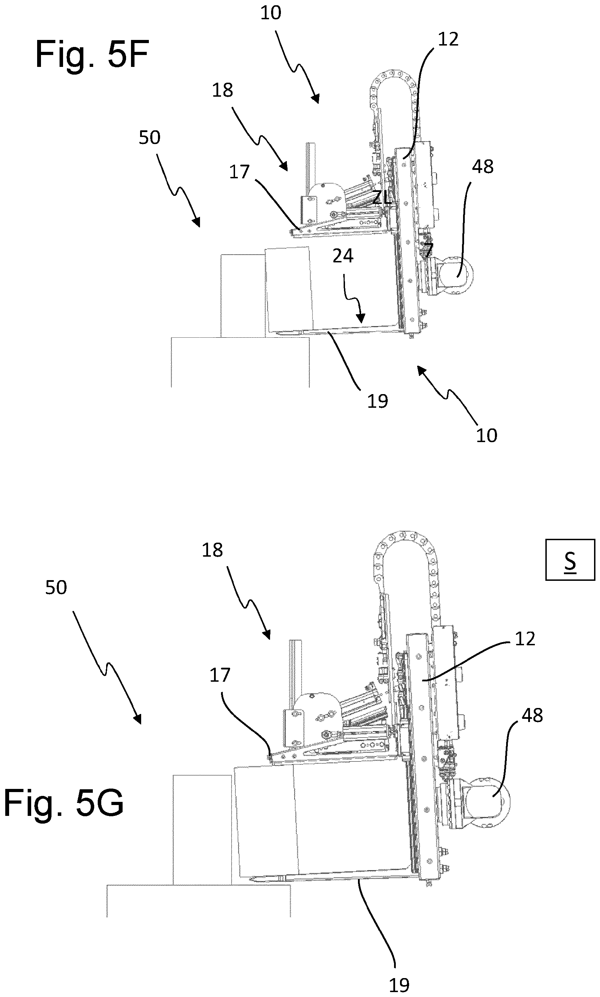

Im Schritt 5E wird der Pneumatikzylinder 25 (vgl. Fig. 2A) des Greiferkopfes 10 betätigt und die oberer Greifeinheit 17 gegenüber der unteren Greifeinheit 19 angehoben. Über den Arbeitsarm 48 wird der Greiferkopf 10 aus der Position nach Fig. 5E in die Position nach Fig. 5F bewegt, wodurch die untere Greifeinheit 19 weiter in die Lücke L eintaucht, bis die jeweiligen Verpackungszuschnitte, welche über den Greiferkopf 10 klemmend erfasst werden sollen, vollständig von der unteren Greifeinheit 19 des Greiferkopfes 10 getragen werden.

Nachfolgend wird die obere Greifeinheit 17 über den Pneumatikzylinder 25 (vgl. Fig. 2A) in Richtung der unteren Greifeinheit 19 bewegt, bis die obere Greifeinheit 17 mit einem jeweiligen oberen Verpackungszuschnitt in Kontakt tritt und die jeweiligen Verpackungszuschnitte mit einer vorgegebenen Klemmkraft zwischen der oberen Greifeinheit 17 und der unteren Greifeinheit 19 gehalten werden.

In Fig. 5G sind die Verpackungszuschnitte klemmend über die obere Greifeinheit 17 und die untere Greifeinheit 19 erfasst. Wie es Fig. 5G zeigt, kann es ausreichend sein, wenn die untere Greifeinheit 19 im Schritt 5f nur bis zu einer solchen Position in die Lücke L eintaucht, bei welcher die obere Greifeinheit 17 bei einer klemmenden Erfassung lediglich mit einem Teilbereich des oberen Verpackungszuschnittes in Kontakt tritt. Es ist daher nicht notwendig, dass die untere Greifeinheit 19 bis zu einer solchen Position in die Lücke L eintaucht, bei welcher Position sich die jeweiligen klemmend zu erfassenden Verpackungszuschnitte bereits in einem Nahbereich des Rahmens 12 befinden.

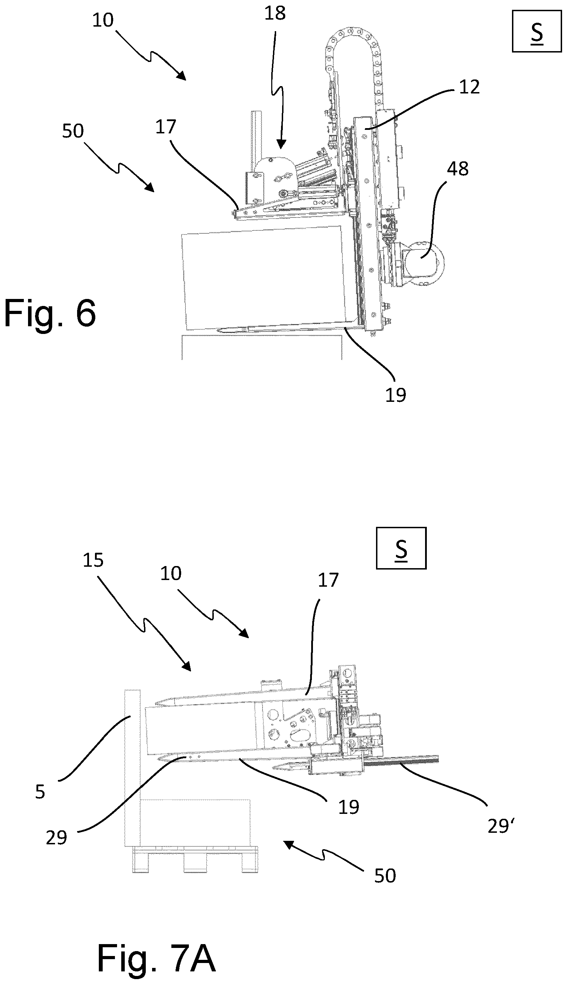

Die schematische Darstellung der Fig. 6 zeigt weitere Aspekte, wie sie in diversen Ausführungsformen des erfindungsgemäßen Verfahrens 100 vorgesehen sein können. Insbesondere zeigt Fig. 6 klemmend entgegenzunehmende Verpackungszuschnitte, die sich im Hinblick auf ihre Dimensionierung von den Verpackungszuschnitten nach Figuren 5A bis 5G unterscheiden. Die untere Greifeinheit 19 wird zur klemmenden Entgegennahme weiterhin in die Lücke L eingeführt, jedoch gegenüber der Ausführungsform nach Figuren 5A bis 5G mit größerer Eintauchtiefe. Dies ermöglicht selbst bei Verpackungszuschnitten mit größeren Abmessungen eine sichere klemmende Entgegennahme, wenn die obere Greifeinheit 17 und die untere Greifeinheit 19 nachfolgend eine Zustellbewegung ausführen.

Die Figuren 7A bis 7C zeigen Schritte, wie sie einzeln oder gemäß der in Figuren 7A bis 7C gezeigten Kombination in weiteren Ausführungsformen des erfindungsgemäßen Verfahrens 100 vorgesehen sein können. Das Verfahren 100 wird mittels eines Greiferkopfes 10 durchgeführt, wie er vorhergehend im Ausführungsbeispiel nach Figuren 1A und 1B dargestellt und beschrieben wurde.

In Fig. 7A hat der Greiferkopf 10 bereits mehrere Verpackungszuschnitte von dem Stapel 50 klemmend entgegengenommen. Die obere Greifeinheit 17 und die untere Greifeinheit 19 stehen in Fig. 7A mit den klemmend entgegengenommenen Verpackungszuschnitten kraftbeaufschlagt in Anlage. Vor der in Fig. 7A gezeigten klemmenden Entgegennahme wurde eine jeweilige Außenkante der noch entgegenzunehmenden Verpackungszuschnitte mittels der Trenneinheit 18 angehoben und eine Lücke L gebildet, wie dies zu den Ausführungsform nach Figuren 5A bis 5G bereits erwähnt und beschrieben worden ist.

Die klemmend entgegengenommenen Verpackungszuschnitte ragen in Figuren 7A bis 7C in Richtung der Bildebene und in Gegenrichtung der Bildebene über die als Bestandteil der unteren Greifeinheit 19 ausgebildeten inneren Gabelzinken 29 hinaus. Um die klemmend entgegengenommenen Verpackungszuschnitte während der weiteren Handhabung stabil halten zu können, werden äußere Gabelzinken 29` mit dem jeweiligen in Richtung der Bildebene und in Gegenrichtung der Bildebene hinausragenden Teil des klemmend entgegengenommenen unteren Verpackungszuschnittes in Anlage gebracht. In Figuren 7A bis 7C ist von diesen beiden äußeren Gabelzinken 29` lediglich eine äußere Gabelzinke 29` zu erkennen, da die weitere äußere Gabelzinke 29` von der in Figuren 7A bis 7C dargestellten äußeren Gabelzinke 29` verdeckt wird. Beide äußere Gabelzinken sind in Figuren 1A und 1B dargestellt.

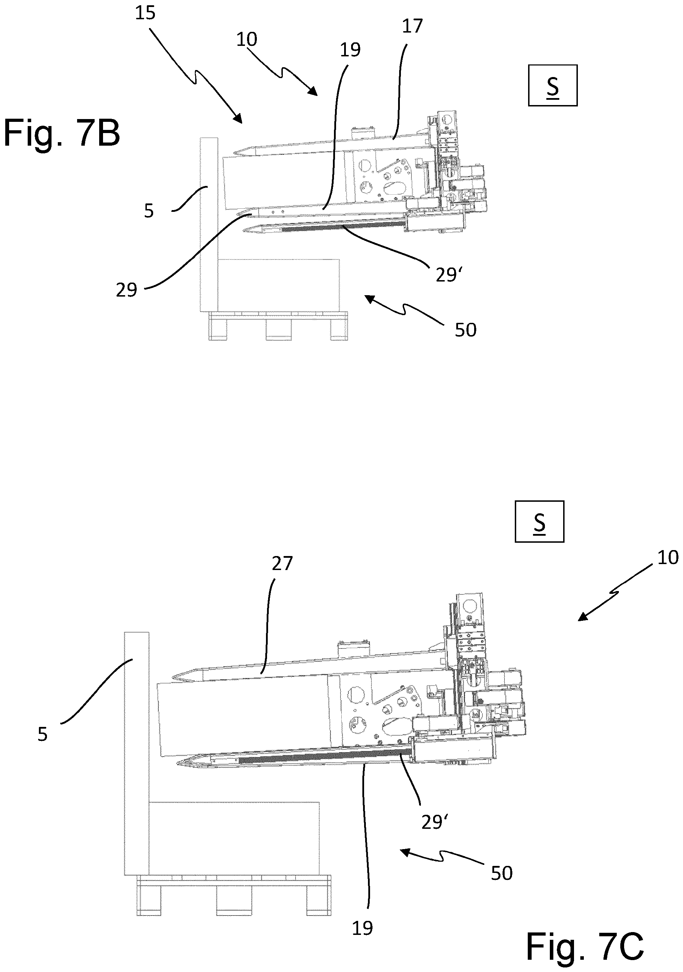

Aus einer Zusammenschau der Fig. 7A mit Fig. 7B ergibt sich, dass die äußeren Gabelzinken 29` zunächst entlang ihrer Längsachse bewegt werden, bis sich die äußeren Gabelzinken 29` gemäß Fig. 7B an einer vorgegebenen Position unterhalb der bereits klemmend entgegengenommenen Verpackungszuschnitte befinden. Hierbei kann es sein, dass der relative Abstand der äußeren Gabelzinken 29` zudem vergrößert wird bzw. dass die äußeren Gabelzinken 29` zudem auseinandergefahren werden.

Ein weiterer Schritt wird durch eine Zusammenschau der Fig. 7B mit Fig. 7C verdeutlicht. Aus der Position nach Fig. 7B werden die ersten Gabelzinken 27 und die inneren Gabelzinken 29 gemeinsam abgesenkt, bis die äußeren Gabelzinken 29` mit den bereits klemmend entgegengenommenen Verpackungszuschnitten in Anlage gelangen. In Bildrichtung und entgegengesetzt zur Bildrichtung über die inneren Gabelzinken 29 hinausragende Anteile der Verpackungszuschnitte werden in Fig. 7C über die äußeren Gabelzinken 29` gestützt.

Wenn ein Manipulator 1 in einem nachfolgenden Schritt den Greiferkopf 10 zusammen mit den klemmend entgegengenommenen Verpackungszuschnitten an einen Verbringungsort transportiert, ist ein Risiko sehr gering, dass sich Verpackungszuschnitte ungewollt vom Greiferkopf 10 lösen. Zudem wird durch die beschriebene Vorgehensweise verhindert, dass klemmend entgegengenommene Verpackungszuschnitte durchhängen, was sich wiederum nachteilig auf deren Handhabung auswirken kann. Indem ein solcher Durchhang verhindert wird, kann ein Risiko reduziert oder sogar ausgeschlossen werden, dass klemmend entgegengenommene Verpackungszuschnitte im Verlauf des Transportes an den Verbringungsort beschädigt und hierbei insbesondere geknickt werden.

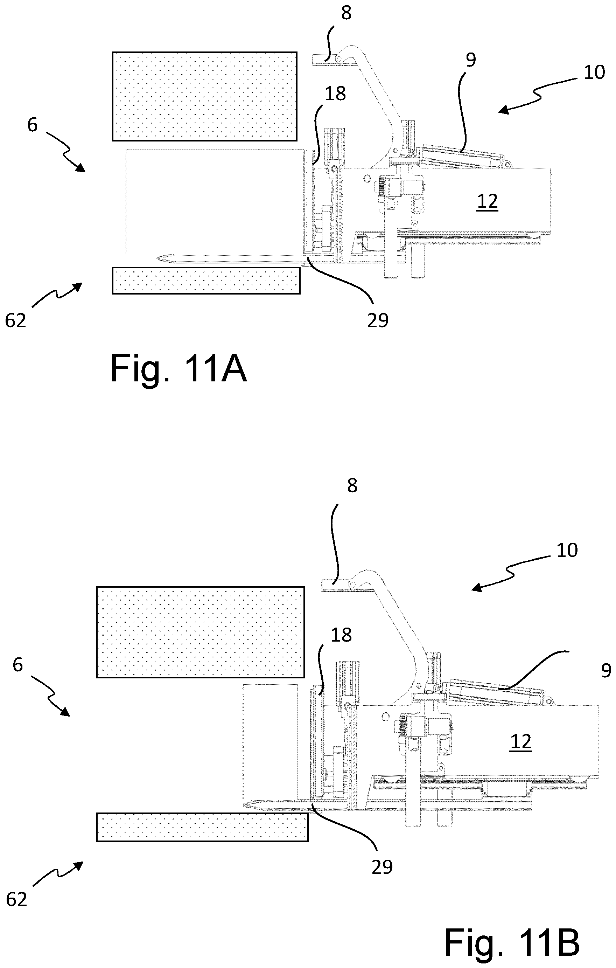

Zudem gewährleistet die beschriebene Vorgehensweise eine hohe Prozesssicherheit bei der nachfolgenden Positionierung der klemmend entgegengenommenen Verpackungszuschnitte am Zielort, an dem sich eine Ablage 62 befinden kann. Auch hat sich die beschriebene Vorgehensweise bewährt, wenn die klemmend entgegengenommenen Verpackungszuschnitte in einen bauraumbegrenzten Ausschnitt eingeführt werden sollen, welcher bspw. durch eine Öffnung 6 (vgl. Fig. 11A) ausgebildet sein kann. Ergänzend oder alternativ zu der beschriebenen Ausführungsform kann es sein, dass die äußeren Gabelzinken 29` angehoben werden, bis die äußeren Gabelzinken 29` mit den bereits klemmend entgegengenommenen Verpackungszuschnitten in Anlage gelangen.

Die Fig. 8 zeigt eine schematische Perspektivansicht einer Ausführungsform eines erfindungsgemäßen Verpackungssystems 60. Das Verpackungssystem 60 umfasst einen in Fig. 8 nicht mit dargestellten Manipulator 1, der als Knickarmroboter 1' ausgebildet ist und einen Greiferkopf 10 trägt. Der Greiferkopf 10 besitzt eine obere Greifeinheit 17 und eine untere Greifeinheit 19, die zum klemmenden Erfassen jeweils mehrerer Verpackungszuschnitte eine Zustellbewegung ausführen können.

Das Verpackungssystem umfasst eine Ablage 62, die eine Aufstandsfläche 64 ausbildet. Auf die Aufstandsfläche 64 kann der Manipulator 1 über den Greiferkopf 10 die jeweiligen klemmend erfassten Verpackungszuschnitte absetzen. Wie es Fig. 8 erkennen lässt, umfasst die untere Greifeinheit 19 des Greiferkopf 10 zwei parallel zueinander orientierte Gabelzinken 28. Wenn mehrere Verpackungszuschnitte über den Greiferkopf 10 klemmend erfasst sind, stehen die jeweiligen mehreren Verpackungszuschnitte auf den Gabelzinken 28 auf. Die Aufstandsfläche 64 der Ablage 62 bildet mehrere Schlitze 7 aus, deren jeweilige Breite mit den Gabelzinken 28 derart korrespondiert, dass die Gabelzinken 28 über die Schlitze 7 durch die Aufstandsfläche 64 hindurchtreten können. Hierdurch können jeweils mehrere Verpackungszuschnitte schnell und einfach über den Greiferkopf 10 auf der Aufstandsfläche 64 abgesetzt werden.

Ein jeweiliger Schlitz 7 wird bei der Ablage 62 zwischen zwei unmittelbar benachbarten Transportbändern 69 ausgebildet. In diversen Ausführungsformen ist vorstellbar, dass die Ablage 62 mehrere Leisten besitzt, die in Richtung des Greiferkopfes 10 bewegt werden, um vom Greiferkopf 10 die jeweiligen mehreren klemmend erfassten Verpackungszuschnitte entgegenzunehmen.

Über die Ablage 62 bzw. über die als Bestandteil der Ablage 62 ausgebildeten Transportbänder 69 werden die jeweiligen entgegengenommenen Verpackungszuschnitte zu einer Zentriereinrichtung 70 bewegt, welche die mehreren Verpackungszuschnitte bündig ausrichtet. Von dort werden die Verpackungszuschnitte weiter transportiert und Artikel, bei denen es sich um Getränkebehälter handelt, mit den Verpackungszuschnitten verpackt. Die Zentriereinrichtung sowie die Ablage 62 sind somit als Bestandteil einer in Fig. 8 nicht vollständig dargestellten Verpackungsvorrichtung ausgebildet, welche Verpackungsvorrichtung wiederum einen Bestandteil des Verpackungssystems 60 bildet.

Die Ausführungsform eines Greiferkopfes 10 ist in Fig. 8 lediglich beispielhaft zu verstehen. Auch ist vorstellbar, dass der Greiferkopf 10 des Verpackungssystems 60 mehrere innere Gabelzinken 29 und mehrere äußere Gabelzinken 29` umfasst, wie dies im Ausführungsbeispiel nach Figuren 1A und 1B bereits dargestellt wurde und welche mehreren inneren Gabelzinken 29 und/oder welche mehreren äußeren Gabelzinken 29 via die Schlitze 7 durch die Aufstandsfläche 64 der Ablage 62 hindurchbewegt werden können.

Die Fig. 9 zeigt eine schematische Ansicht einer weiteren Ausführungsform eines erfindungsgemäßen Verpackungssystems 60. Auf Verweis mit Bezugsziffer 10 ist in Fig. 9 weiterhin ein Greiferkopf dargestellt, welcher mehrere Verpackungszuschnitte gemeinsam klemmend erfassen kann. In Fig. 9 sind ein Stapel 50 an Verpackungszuschnitten und mehrere weitere Stapel 51 bis 57 an Verpackungszuschnitten gezeigt.

Die Fig. 9 verdeutlicht insbesondere eine Reihenfolge, mit welcher der Greiferkopf 10 jeweils mehrere Verpackungszuschnitte entgegennimmt und auf der Ablage 62 absetzt. Hierbei beginnt der Greiferkopf 10 mit den mehreren Verpackungszuschnitten des Stapels 50 und verbringt diese mehreren Verpackungszuschnitte zur Ablage 62. Hierauf setzt der Greiferkopf 10 die Abnahme der jeweiligen weiteren mehreren Verpackungszuschnitte von den Stapeln 51 bis 57 in fortlaufender Reihenfolge fort.

Der Greiferkopf 10 umfasst eine Trenneinheit 18 mit einem Anschlag 32, wie er im Ausführungsbeispiel nach Figuren 3A bis 3C bereits dargestellt wurde. Über den Anschlag 32 drückt der Greiferkopf 10 die jeweiligen noch klemmend zu erfassenden mehreren Verpackungszuschnitte in Richtung der Anschlagwand 5, wobei die jeweiligen Verpackungszuschnitte bündig zueinander ausgerichtet werden.

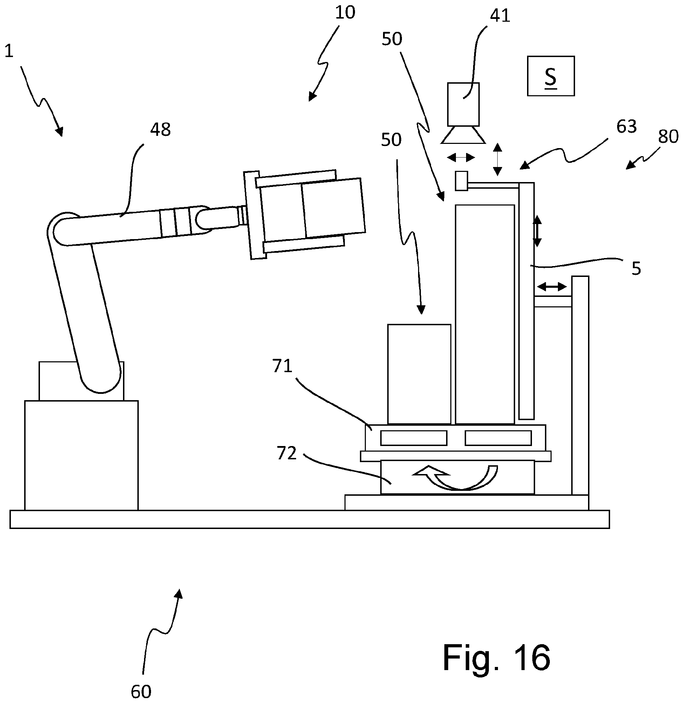

Weitere Verpackungszuschnitte von weiteren Stapeln 51 bis 57 können durch einen Niederhalter 63 (vgl. Fig. 16) in Richtung nach unten gedrückt werden, wobei ein solcher Niederhalter hierbei auf einen jeweiligen zuoberst angeordneten Verpackungszuschnitt des jeweiligen weiteren Stapels 51 bis 57 aufsetzt. So kann es bspw. sein, dass der Greiferkopf 10 zunächst die jeweiligen mehreren Verpackungszuschnitte von dem Stapel 50 und den weiteren Stapeln 51 bis 53 taktweise entgegennimmt und auf der Ablage 62 jeweils absetzt. Der Niederhalter 63 kann hierbei die jeweiligen mehreren Verpackungszuschnitte der weiteren Stapel 54 bis 57 in Richtung nach unten drücken.

Wenn der Greiferkopf 10 sodann beginnt, die mehreren Verpackungszuschnitte von dem Stapel 54 entgegenzunehmen, kann der Niederhalter 63 in Richtung einer weiteren Reihe an Stapeln zur Anschlagwand 5 versetzt werden und diese Verpackungszuschnitte in Richtung nach unten drücken. Die Bewegung bzw. die Position des Niederhalters 63 kann somit jeweils auf die Entgegennahme von Verpackungszuschnitten über den Greiferkopf 10 abgestimmt sein.

Da die mehreren Verpackungszuschnitte unterschiedlicher Stapel 50 bis 57 in der Praxis dicht beeinanderliegen oder miteinander in Oberflächenkontakt stehen, kann es sein, dass sich Verpackungszuschnitte benachbarter Stapel 51 bis 57 ungewollt miteinander verhaken, wenn der Greiferkopf 10 die jeweiligen mehreren Verpackungszuschnitte entgegennimmt und zur Ablage 62 bewegt. Bewährt hat es sich daher, wenn der Greiferkopf 10 die jeweiligen mehreren Verpackungszuschnitte schräg vom jeweiligen Stapel 50 bis 57 wegbewegt, wenn der Greiferkopf 10 die jeweiligen mehreren Verpackungszuschnitte vom jeweiligen Stapel 50 bis 57 abnimmt. Hierdurch kann ein Risiko sehr geringgehalten werden, dass sich Verpackungszuschnitte ungewollt miteinander verhaken.

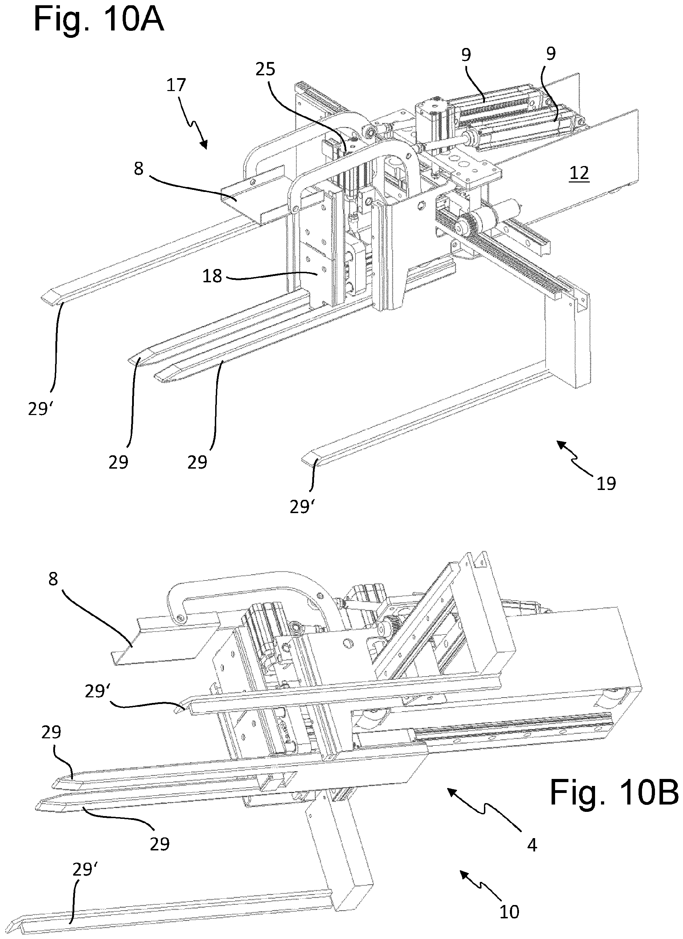

Die Fig. 10A zeigt eine schematische Perspektivansicht einer weiteren Ausführungsform eines erfindungsgemäßen Greiferkopfes 10. Der Greiferkopf 10 umfasst einen Rahmen 12, der durch mehrere miteinander verschweißte Blechteile ausgebildet ist. Über einen Pneumatikyzlinder 25 kann die untere Greifeinheit 19 angehoben und abgesenkt werden. Auch umfasst der Greiferkopf 10 eine Trenneinheit 18, über die Außenkanten jeweiliger klemmend zu erfassender Verpackungszuschnitte angehoben werden können.

Die Trenneinheit 18 ist aktuatorisch entlang der inneren Gabelzinken 29 bewegbar. Die obere Greifeinheit 17 umfasst ein Blechteil 8. Durch eine Betätigung der Kolben-Zylindereinheiten 9 kann das Blechteil 8 geschwenkt werden, hierbei auf einen zuoberst angeordneten und bereits von den inneren Gabelzinken 29 aufgenommenen Verpackungszuschnitt aufsetzen und die mehreren bereits aufgenommenen Verpackungszuschnitte klemmend am Greiferkopf 10 festsetzen.

Die Fig. 10B zeigt den Greiferkopf 10 der Ausführungsform nach Fig. 10A von unten. Wie hierin zu erkennen ist, umfasst der Greiferkopf 10 eine Linearführung 4, entlang welcher Linearführung 4 sich die inneren Gabelzinken 29 des Greiferkopfes 10 bewegen können. Eine Bewegungsrichtung verläuft hierbei parallel zur jeweiligen Längserstreckung der inneren Gabelzinken 29 sowie parallel zur Längserstreckung der äußeren Gabelzinken 29'. Durch eine solche Bewegung können die inneren Gabelzinken 29 über eine durch die Trenneinheit 18 gebildete Lücke L, wie dies zur Ausführungsform nach Figuren 5a bis 5g bereits beschrieben wurde, in einen Stapel 50 an Verpackungszuschnitten eingeführt werden.

Gegenüber den bereits beschriebenen Ausführungsbeispielen besteht mittels des Greiferkopfes 10 nach Figuren 10A und 10B somit die Möglichkeit jeweils mehrere Verpackungszuschnitte aufzunehmen, ohne dass der Greiferkopf 10 zum Eintauchen der inneren Gabelzinken 29 in eine Lücke L selbst über einen Arbeitsarm 48 eines Manipulators 1 bewegt werden muss.

Die Figuren 11A und 11B verdeutlichen weitere Vorteile der Ausführungsform eines Greiferkopfes 10 nach Figuren 10A und 10B. Die jeweiligen Verpackungszuschnitte wurden von dem Greiferkopf 10 bereits klemmend erfasst. Figuren 11A und 11B verdeutlichen eine Übergabe der Verpackungszuschnitte an eine Ablage 62.

Wie es die Fig. 11A zeigt, können die mehreren Verpackungszuschnitte nach einer Aufnahme über die inneren Gabelzinken 29 mit der Trenneinheit 18 in Anlage gebracht werden, indem die inneren Gabelzinken 29 entlang der Linearführung 4 in Richtung des Rahmens 12 bewegt werden. Um die Verpackungszuschnitte klemmend am Greiferkopf 10 zu halten, reicht es aus, wenn das Blechteil 8 lediglich in einem kleinen Bereich, der sich nahe an der Trenneinheit 18 befindet, auf einen oberen Verpackungszuschnitt kraftbeaufschlagt aufgesetzt wird.

Die Ablage 62 bildet im Ausführungsbeispiel nach Figuren 11A und 11B eine Öffnung 6 aus, in welche die Verpackungszuschnitte über den Greiferkopf 10 eingebracht werden sollen.

Die Öffnung 6 weist eine solche Dimensionierung auf, dass der Greiferkopf 10 nicht vollständig in die Öffnung 6 hineinbewegt werden kann, um die Verpackungszuschnitte an die Ablage 62 zu übergeben. Über den Pneumatikzylinder 9 wird vor einer Übergabe zunächst das Blechteil 8 in Richtung nach oben geschwenkt, wodurch es in eine Warteposition gelangt, welche in Figuren 11A und 11B dargestellt ist. Eine solche Bewegung des Blechteils 8 ermöglicht es dem Greiferkopf 10, sehr nahe an die Öffnung 6 heranbewegt zu werden, um nachfolgend die Verpackungszuschnitte an die Ablage 62 zu übergeben.

Das Einbringen der Verpackungszuschnitte in die Öffnung 6 kann erfolgen, indem der Greiferkopf 10 über den Arbeitsarm 48 des Manipulators 1 bewegt wird, bis sich sämtliche an die Ablage 62 zu übergebenden Verpackungszuschnitte in der Öffnung befinden. Alternativ oder ergänzend hierzu können die inneren Gabelzinken 29 ausgefahren bzw. entlang der Linearführung 4 bewegt, wobei die Verpackungszuschnitte in die Öffnung 6 eintreten. Wenn sich die Verpackungszuschnitte in der Öffnung 6 befinden, werden die Verpackungszuschnitte abgesetzt, woraufhin der Greiferkopf 10 zur klemmenden Entgegennahme weiterer Verpackungszuschnitte in Richtung eines in den Figuren 11A und 11B nicht mit dargestellten Stapels 50 bewegt wird.

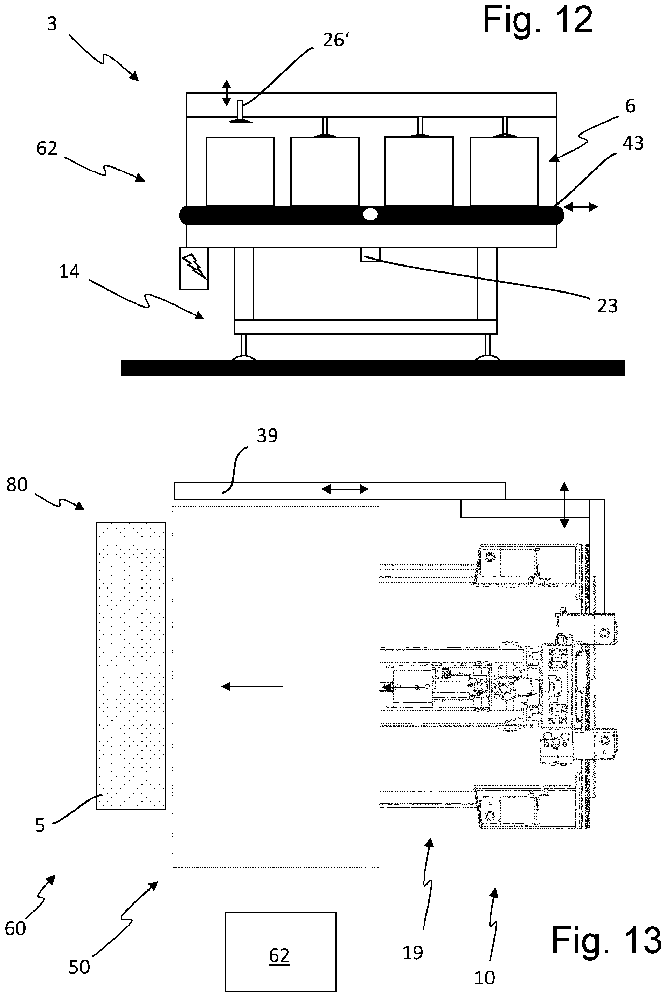

Die Fig. 12 zeigt eine Ausführungsform einer Ablage 62, wie sie in diversen Ausführungsformen eines erfindungsgemäßen Verpackungssystems 60 sowie in diversen Ausführungsformen des erfindungsgemäßen Verfahrens 100 vorgesehen sein kann. Die Ablage 62 ist vorliegend als Bestandteil eines Adapters 3 ausgebildet und steht auf einem Tragegestell 14 auf bzw. wird von einem Tragegestell 14 getragen. Eine Öffnung 6 ist bei dem Adapter 3 derart ausgebildet, dass ein vollständiger Greiferkopf 10 in die Öffnung 6 nicht hineinbewegt werden kann. Um Verpackungszuschnitte an die Ablage 62 bzw. an den Adapter 3 zu übergeben, eignen sich daher insbesondere eine Ausführungsform eines Greiferkopfes 10, wie sie vorhergehend in den Figuren 10A und 10B sowie 11A und 11B dargestellt und beschrieben worden ist.

Der Adapter 3 besitzt mehrere Klemmmittel 26', welche auf einen jeweiligen oberen Verpackungszuschnitt aufgesetzt werden können, um die jeweiligen mehreren Verpackungszuschnitte sicher auf der Ablage 62 zu halten. Zudem besitzt der Adapter 3 eine Kupplung 23, über welche der Adapter 3 mit einem fahrerlosen Transportfahrzeug bzw. mit einem FTS koppelbar ist, so dass der Adapter 3 via die Kupplung 23 vom fahrerlosen Transportfahrzeug bzw. vom FTS mit elektrischer Energie und ggf. auch mit Druckluft versorgt wird. Bezugsziffer 43 verweist auf eine Mattenbahn, mittels welcher der Adapter 3 bereits aufgenommene Verpackungszuschnitte transportieren und bedarfsweise an eine weitere Einrichtung übergeben kann. Die Bewegungsrichtung ist in Fig. 12 mit Pfeildarstellung angedeutet.

Die Fig. 13 zeigt eine schematische Ansicht einer Ausführungsform eines Verpackungssystem 60 und eine weitere Ausführungsform eines erfindungsgemäßen Greiferkopfes 10. Das gezeigte Verpackungssystem 60 umfasst eine Versorgungseinrichtung 80, über die ein Stapel 50 an Verpackungszuschnitten bereitgestellt wird. Im Bereich des Stapels 50 befindet sich eine Anschlagswand 5 der Versorgungseinrichtung 80.

Bevor der Greiferkopf 10 die jeweiligen mehreren Verpackungszuschnitte aufnimmt, werden die jeweiligen mehreren Verpackungszuschnitte über den Anschlag 32 der Trenneinheit 18 (vgl. Figuren 3A bis 3C) gegen die Anschlagwand 5 der Versorgungseinrichtung 80 gedrückt, wobei vordere und hintere Kanten der jeweiligen aufzunehmenden Verpackungszuschnitte bündig zueinander ausgerichtet werden. Um seitliche Außenkanten der jeweiligen aufzunehmenden Verpackungszuschnitte bündig auszurichten, umfasst der Greiferkopf 10 zwei Zentrierelemente 39, von denen in Fig. 13 lediglich ein Zentrierelement 39 dargestellt ist.

Das Zentrierelement 39 kann in linearer Richtung bewegt werden und richtet hierbei die seitlichen Außenkanten der jeweiligen noch vollständig aufzunehmenden Verpackungszuschnitte bündig zueinander aus. In Fig. 13 sind die aufzunehmenden Verpackungszuschnitte des Stapels 50 hierbei lediglich teilweise auf der unteren Greifeinheit 19 angeordnet.

Nach einem klemmenden Erfassen der Verpackungszuschnitte, deren Außenkanten vorhergehend bündig zueinander ausgerichtet wurden, übergibt der Greiferkopf 10 die jeweiligen Verpackungszuschnitte an die Ablage 62, die in Fig. 13 lediglich schematisch dargestellt ist. Die Ablage 62 kann Bestandteil einer Verpackungsvorrichtung sein, welche mit den entgegengenommenen Verpackungszuschnitten Getränkebehälter verpackt.

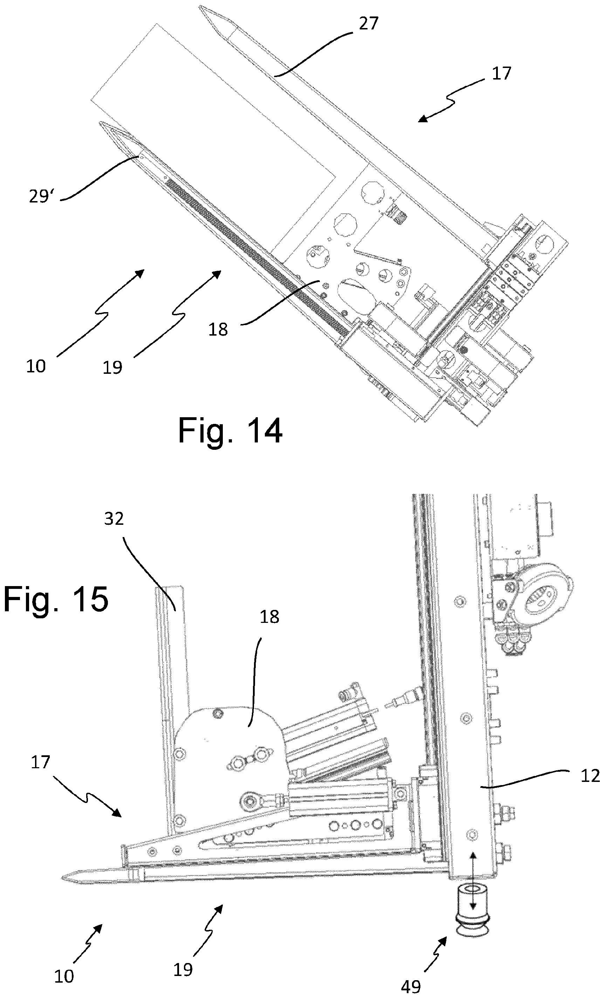

Die Fig. 14 zeigt weitere Details, wie sie in diversen Ausführungsformen des erfindungsgemäßen Verpackungssystems 60 sowie in diversen Ausführungsformen des erfindungsgemäßen Verfahrens 100 vorgesehen sein können. Insbesondere ist in Fig. 14 eine Möglichkeit verdeutlich, mit der die in Fig. 14 bereits durch den Greiferkopf 10 aufgenommenen mehreren Verpackungszuschnitte bündig zueinander ausgerichtet werden können.

Der Greiferkopf 10 ist in Fig. 14 mit einem nicht dargestellten Manipulator 1 verbunden. Nach einer Aufnahme der mehreren Verpackungszuschnitte werden die obere Greifeinheit 17 und die untere Greifeinheit 19 auseinanderbewegt, so dass die obere Greifeinheit 17 und die untere Greifeinheit 19 hierdurch in die Position gemäß Fig. 14 gelangen. Anschließend wird der Greiferkopf 10 über den Manipulator 1 derart gedreht, dass die aufgenommenen Verpackungszuschnitte schwerkraftbedingt gegen die Trenneinheit 18 rutschen, wodurch Außenkanten dieser mehreren Verpackungszuschnitte bündig zueinander ausgerichtet werden.

Ein Greiferkopf 10 gemäß der Ausführungsform nach Fig. 14 kann zudem auch Zentrierelemente 39 umfassen, wie sie vorhergehend bereits zu Fig. 13 gezeigt und beschrieben wurden und über welche Zentrierelemente 39 seitliche Außenkanten der jeweiligen aufgenommenen mehreren Verpackungszuschnitte zusätzlich bündig zueinander ausgerichtet werden können. Hierbei kann es auch sein, dass der Greiferkopf 10 um eine Achse gedreht wird, die parallel zu den ersten Gabelzinken 27 bzw. zu den äußeren Gabelzinken 29` und den inneren Gabelzinken 29 verläuft, wodurch die aufgenommenen mehreren Verpackungszuschnitte schwerkraftbedingt gegen ein Zentrierelement 30 rutschen, wodurch die seitlichen Außenkanten der mehreren aufgenommenen Verpackungszuschnitte bündig zueinander ausgerichtet werden.

Die Fig. 15 zeigt eine schematische Ansicht einer weiteren Ausführungsform eines erfindungsgemäßen Greiferkopfes 10. Die Ausführungsform nach Fig. 15 besitzt weiterhin eine Trenneinheit 18 gemäß der vorherigen Beschreibung zu den Figuren 3A bis 3C. Auch umfasst der Greiferkopf 10 weiterhin einen Rahmen 12 sowie eine unterer Greifeinheit 19 und eine obere Greifeinheit 17, von denen in Fig. 15 lediglich die untere Greifeinheit 19 dargestellt wurde.

Bestandteil des Greiferkopfes 10 ist zudem ein Sauginstrument 49. Ein solches Sauginstrument 49, wie es zu Fig. 15 dargestellt und beschrieben wird, ist nicht auf die Ausführungsform nach Fig. 15 beschränkt, sondern kann im allgemeinen Zusammenhang sowie bei sämtlichen vorhergehend beschriebenen Ausführungsformen eines Greiferkopfes 10 vorgesehen sein.

Auch kann ein Greiferkopf 10 mehrere solche Sauginstrumente umfassen.

Anstelle oder ergänzend zu einem solchen Sauginstrument 49 kann ein Greiferkopf 10 auch andere Greifinstrumente, wie bspw. mindestens einen Nadelgreifer, mindestens einen Adhäsionsgreifer oder mindestens ein über elektrostatische Adhäsion arbeitendes Greifinstrument oder ein durch elektrostatische Adhäsion unterstütztes Greifinstrument besitzen, welches einen Verpackungszuschnitt entgegennehmen kann.

In der Praxis kann es sein, dass mindestens ein einzelner Verpackungszuschnitt eines Stapels 50 zurückbleibt, wenn mittels eines Greiferkopfes 10 in mehreren Schritten jeweils mehrere Verpackungszuschnitte von Stapel 50 abgenommen wurden. Über ein Sauginstrument 49 bzw. über die vorherig erwähnten Greifinstrumente kann der letzte Verpackungszuschnitt erfasst und hierauf folgend über den Greiferkopf 10 an einen Zielort gebracht werden.

Darüber hinaus ist vorstellbar, dass mittels eines solchen Sauginstrumentes 49 bzw. über die vorherig beschriebenen Greifinstrumente Verpackungsmaterialien, bei denen es sich bspw. um Deckbretter, Umreifungsbänder, Zwischenlagen oder sogar Paletten handeln kann, mittels des Sauginstrumentes 49 bzw. mittels der vorherig beschriebenen Greifinstrumente erfasst und an einen vorgegebenen Zielort gebracht werden.

Wie es sich in Fig. 15 mittels Pfeildarstellung angedeutet findet, haben sich Ausführungsformen bewährt, bei denen das Sauginstrument 49 aktuatorisch in unterschiedliche Positionen relativ zum Rahmen 12 gebracht werden kann. Hierdurch können auch schwer zugängliche Verpackungszuschnitte, Materialien oder weitere Gegenstände pneumatisch erfasst werden.

Zwar ist das Sauginstrument 49 vorliegend als Bestandteil des Greiferkopfes 10 ausgebildet, jedoch kann es in diversen Ausführungsformen eines erfindungsgemäßen Verpackungssystems 60 ergänzend oder alternativ hierzu sein, dass ein solches Sauginstrument 49 als Bestandteil einer zusätzliche Einrichtung ausgebildet ist, mit welcher Einrichtung ein letzter Verpackungszuschnitt eines Stapels 50 pneumatisch entgegengenommen wird, Verpackungsmaterialien pneumatisch erfasst wird oder sogar eine Palette oder Deckbretter pneumatisch entgegengenommen und an einen gewünschten Zielort gebracht werden.

Die Fig. 16 zeigt eine schematische Ansicht einer weiteren Ausführungsform eines erfindungsgemäßen Verpackungssystems 60. Das Verpackungssystem 60 umfasst einen Manipulator 1, bei dem es sich um einen Knickarmroboter 1' handelt. Der Manipulator 1 trägt einen Greiferkopf 10, der insbesondere gemäß einem Ausführungsbeispiel der vorherigen Beschreibung ausgebildet sein kann.

Über die Versorgungseinrichtung 80 werden vorliegend zwei Stapel 50 an Verpackungszuschnitten bereitgestellt. In weiteren Ausführungsformen kann es auch nur genau ein Stapel 50 sein. Auch können mehr als zwei Stapel 50 vorgesehen sein, die über die Versorgungseinrichtung 80 bereitgestellt werden. Die vorliegend beiden Stapel 50 befinden sich auf einer Palette 71.

Der Manipulator 1 kann über den Greiferkopf 10 jeweils mehrere Verpackungszuschnitte vom Stapel 50 klemmend erfassen und auf einer in Fig. 16 nicht mit dargestellten Ablage 62 absetzen.

Die Versorgungseinrichtung 80 umfasst einen Drehtisch 72, auf dem die Stapel 50 an Verpackungszuschnitten angeordnet sind. Der Drehtisch 72 kann um eine vertikal orientierte Achse rotierend bewegt werden, wodurch einer der beiden Stapel 50 in den Zugriffsbereich des Manipulators 1 gelangt.

Auch kann es sein, dass ein Stapel 50 mehrere Verpackungszuschnitte umfasst, die in unterschiedlichen Drehorientierungen auf dem Stapel 50 angeordnet sind. Sofern bspw. Verpackungszuschnitte des Stapels 50 eine Längs- und eine Querseite mit unterschiedlichen Längen besitzen und der Manipulator 1 zur Entgegennahme von Verpackungszuschnitten mit einer solchen Drehorientierung über den Greiferkopf 10 ausgebildet ist, bei welcher Drehorientierung die Längsseite in Richtung des Manipulators 1 bzw. in Richtung des Greiferkopfes 10 weist, können die jeweiligen entgegenzunehmenden Verpackungszuschnitte des Stapels 50 durch eine entsprechende Rotation des Drehtisches 72 in die passende und zur Entgegennahme vorgesehene Drehorientierung gebracht werden, bei der die Längsseite in Richtung des Manipulators 1 bzw. in Richtung des Greiferkopfes 10 weist.

Um die Verpackungszuschnitte der Stapel 50 bündig zueinander auszurichten, umfasst die Versorgungseinrichtung 80 eine Anschlagwand 5. Die Anschlagwand 5 ist aktuatorisch in horizontaler Richtung bewegbar, wodurch die Verpackungszuschnitte des jeweiligen Stapels bündig zueinander ausgerichtet werden können.

Weiter umfasst die Versorgungseinrichtung 80 einen Niederhalter 63, der auf einen oder mehrere Stapel 50 aufgesetzt werden kann, um die jeweiligen Verpackungszuschnitte des jeweiligen Stapels 50 auf dem Drehtisch 72 zu fixieren. Wenn der Manipulator 1 über den Greiferkopf 10 Verpackungszuschnitte eines Stapel 50 bündig zueinander ausrichtet, kann der Niederhalter 63 Verpackungszuschnitte eines weiteren Stapels 50 fixieren, um ein Verrutschen von Verpackungszuschnitten des weiteren Stapels 50 zu verhindern.

Die zentrale Steuerung S steht mit einer Sensorik 41 in Verbindung und kann über die Sensorik 41 eine jeweilige Ist-Höhe eines jeweiligen Stapels 50 erkennen. Unter Berücksichtigung der jeweiligen erkannten Ist-Höhe wird der Manipulator 50 über die zentrale Steuerung S betätigt, um Verpackungszuschnitte vom jeweiligen Stapel 50 klemmend entgegenzunehmen.

Bei der Sensorik 41 kann es sich bspw. um eine optische Sensorik, wie eine Kamera oder dergleichen, handeln. Alternativ oder ergänzend hierzu kann es sein, dass die zentrale Steuerung S über die Sensorik 41 eine jeweilige Position der jeweiligen entgegenzunehmenden mehreren Verpackungszuschnitte erkennt und den Manipulator 1 unter Berücksichtigung der erkannten Position der jeweiligen entgegenzunehmenden mehreren Verpackungszuschnitte ansteuert.

Vorteilhafterweise kann hierdurch gewährleistet werden, dass sich die jeweiligen mehreren Verpackungszuschnitte nach einer klemmenden Entgegennahme über den Greiferkopf 10 an einer erwarteten Soll-Position befinden und daher sicher am Greiferkopf 10 gehalten werden.

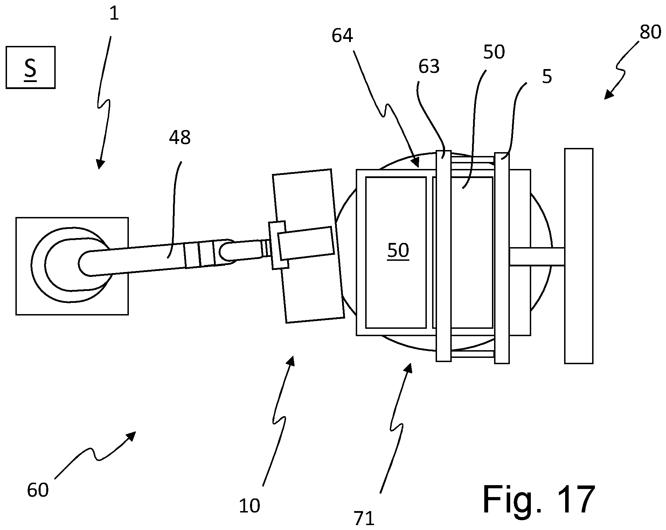

Die Fig. 17 zeigt die Ausführungsform einer Verpackungsvorrichtung 60 nach Fig. 16 in Draufsicht. Hierin sind nochmals der Manipulator 1 mit dem Greiferkopf 10, der Niederhalter 63 und die Anschlagwand 5 zu erkennen. Der Drehtisch 71 bildet eine Aufstandsfläche 64 aus, auf welcher die Stapel 5 aufstehen.

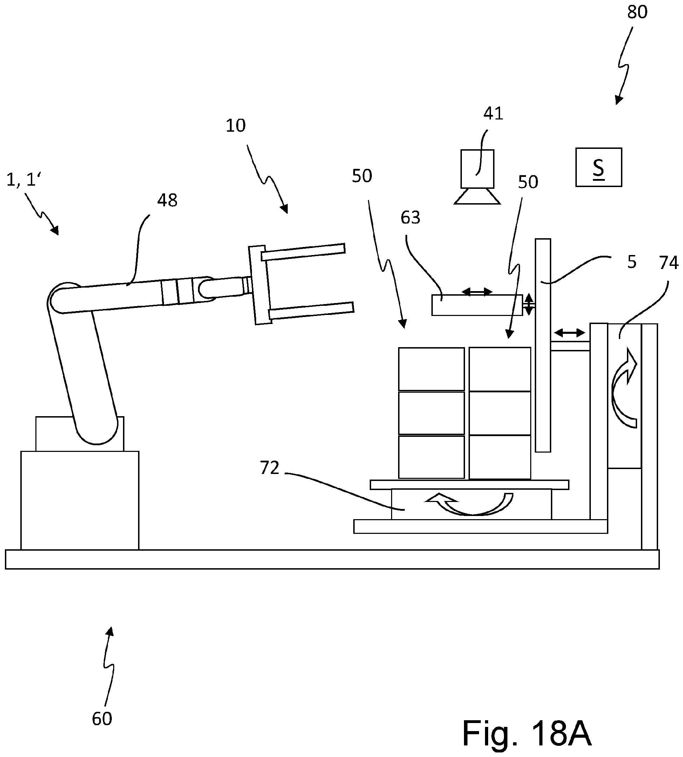

Die Figuren 18A bis 18D zeigen eine schematische Ansicht einer weiteren Ausführungsform einer erfindungsgemäßen Verpackungsvorrichtung 60. Zudem zeigen die Figuren 18A bis 18D einzelne Schritte, sie in diversen Ausführungsformen des erfindungsgemäßen Verfahrens 100 vorgesehen sein können.

Von der Ausführungsform einer Verpackungsvorrichtung 60 nach Fig. 17 unterscheidet sich die Ausführungsform einer Verpackungsvorrichtung 60 nach den Figuren 18A bis 18D insbesondere darin, dass die Anschlagwand 5 sowie der Niederhalter 63 und der Drehtisch 72 um eine gemeinsame horizontale Achse drehbar sind. hierzu stehen die Anschlagwand 5, der Niederhalter 63 und der Drehtisch 72 mit einer Schwenkeinrichtung 74 in Verbindung.

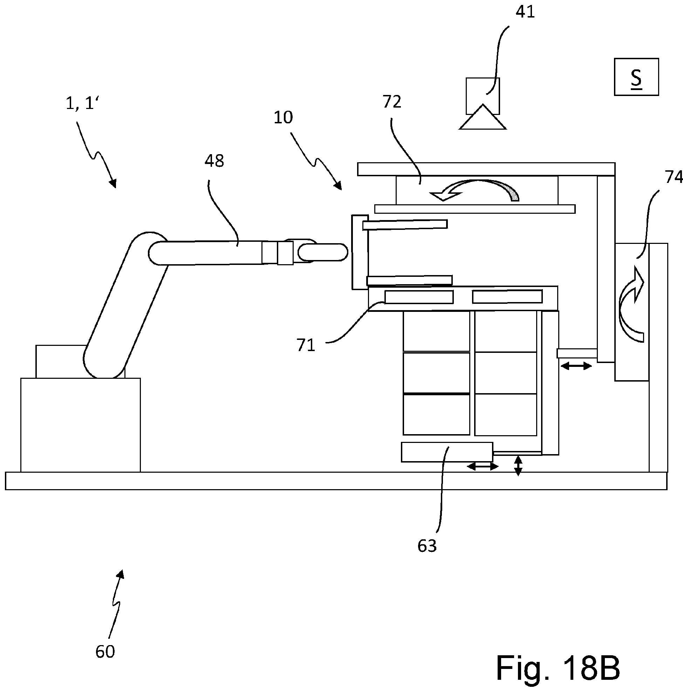

Eine solche Drehbewegung wird durch eine Zusammenschau der Figuren 18A bis 18C verdeutlicht. In Fig. 18A sind bereits mehrere Stapel 50 an Verpackungszuschnitten auf dem Drehtisch 72 der Versorgungseinrichtung 80 positioniert. Der Niederhalter 63 wird auf die beiden nebeneinander positionierten Stapel 50 jeweils aufgesetzt und fixiert die Stapel 50 klemmend auf dem Drehtisch 72. Hiervon ausgehend werden der Niederhalter 63, der Drehtisch 72 und die Anschlagwand 5 mittels der Schwenkeinrichtung 74 um eine horizontale Achse um 180° gedreht, so dass die Stapel 5 an Verpackungszuschnitten, wie dies in Fig. 18B gezeigt ist, auf dem Niederhalter 63 aufstehen. Der Drehtisch 72 wurde in Fig. 18B bereits angehoben und ist gegenüber der Palette 71 beabstandet. Alternativ hierzu kann es sein, dass der Niederhalter 63 zusammen mit den Stapeln 50 gegenüber dem Drehtisch 72 abgesenkt wird und hierdurch in die Position nach Fig. 18B gelangt.

Der Greiferkopf 10 ist dazu ausgebildet, eine Palette 71 aufzunehmen, wie dies ebenso in Fig. 18B gezeigt wird. Hierzu besitzt der Greiferkopf 10 entsprechende Mittel, die in Freiräume der Palette 71 eintauchen können, um die Palette 71 aufzunehmen. In diversen Ausführungsformen kann es auch sein, dass der Greiferkopf 10 mit einer oder mehrerer seiner Gabelzinken in einen oder mehrere Freiräume der Palette 71 eintaucht und die Palette 71 aufnimmt. Bei der Palette 71 kann es sich um eine Euro-Palette handeln. Eine solche Aufnahme einer Palette 71 ist nicht auf das Ausführungsbeispiel nach Figuren 18A bis 18D begrenzt, sondern kann im allgemeinen Zusammenhang und hierbei auch insbesondere bei den vorhergehend bereits beschriebenen Ausführungsbeispielen eines Verpackungssystems 60 und eines Greiferkopfes 1 vorgesehen sein.

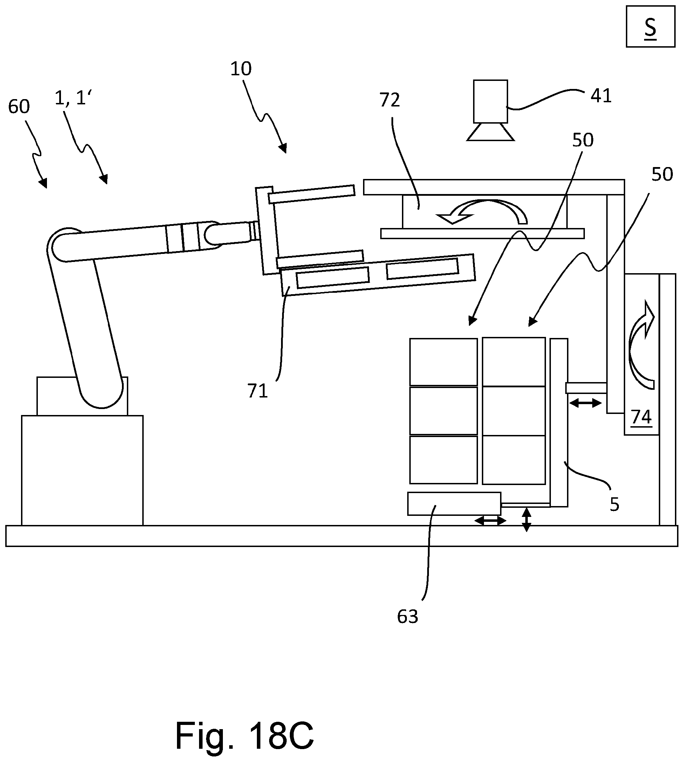

In Fig. 18B nimmt der Manipulator 1 über den Greiferkopf 10 die Palette 71 von den Stapeln 50 an Verpackungszuschnitten ab. In Fig. 18C hat die Palette 71 die Stapel 50 an Verpackungszuschnitten bereits verlassen.

Hierauf folgend kann der Drehtisch 72 auf die Stapel 50 an Verpackungszuschnitten aufgesetzt werden, woraufhin der Drehtisch 72, der Niederhalter 63 und die Anschlagwand 5 erneut via die Schwenkeinrichtung 74 um die horizontale Achse um 180° gedreht werden bzw. um 180° zurückgedreht werden.

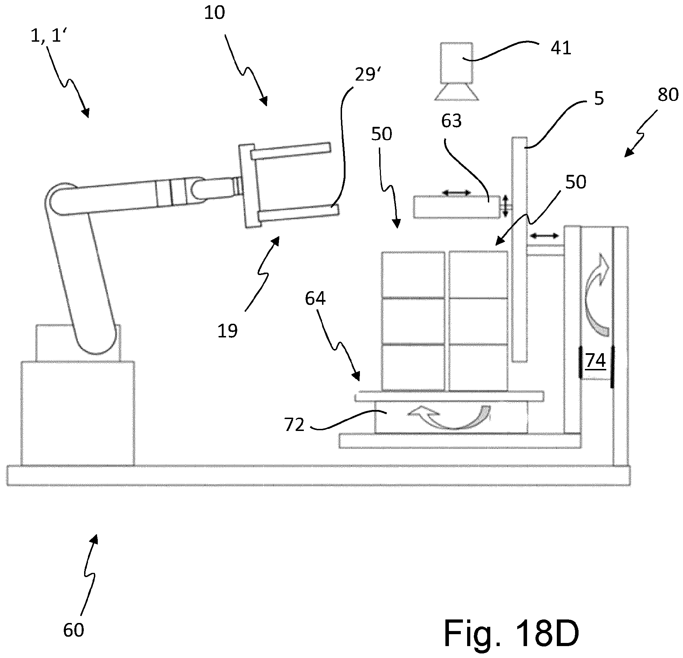

Die Stapel 50 an Verpackungszuschnitten stehen dann entsprechend Fig. 18D auf dem Drehtisch 72 auf, ohne dass sich zwischen dem Drehtisch 72 und den Stapeln 50 an Verpackungszuschnitte eine Palette 71 befindet.

Es hat sich bewährt, wenn der Drehtisch 72 eine Aufstandsfläche 62 für die Stapel 50 an Verpackungszuschnitten besitzt, die mehrere Schlitze 7 ausbildet, wie dies bereits für die Ablage 64 für das Ausführungsbeispiel nach Fig. 8 beschrieben wurde. Hierdurch können die Gabelzinken 29 bzw. 29' der unteren Greifeinheit 19 in die Schlitze 7 eintauchen und hierdurch auf einfache Art und Weise sämtliche Verpackungszuschnitte eines Stapels 50 vom Drehtisch 72 abnehmen.

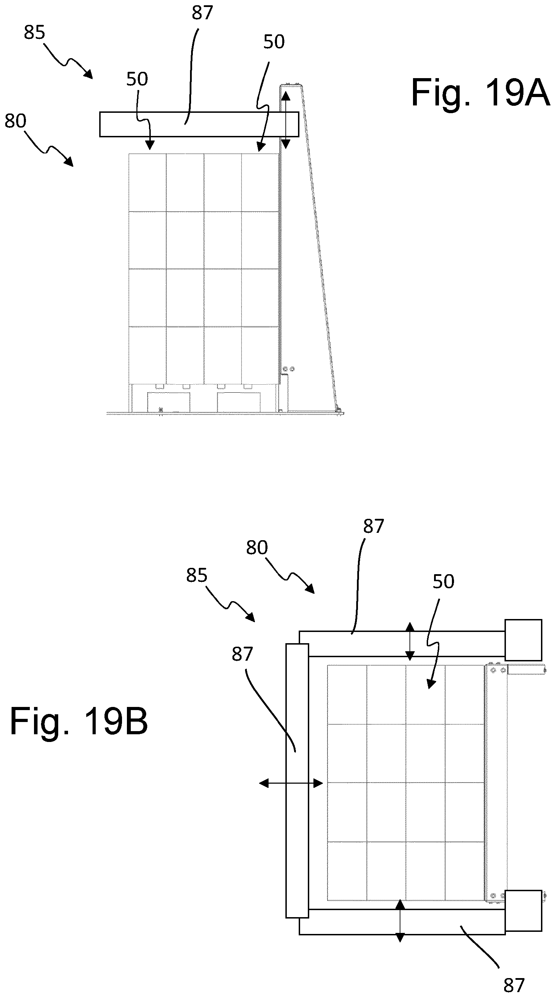

Die Figuren 19A und 19B zeigen ein Ausführungsbeispiel einer Versorgungseinrichtung 80, wie sie in diversen Ausführungsformen eines erfindungsgemäßen Verpackungssystems 60 vorgesehen sein kann. Die Versorgungseinrichtung 80 umfasst eine Zentriereinrichtung 85 mit mehreren Zentrierbalken 87.

Wie es in Fig. 19B mittels Pfeildarstellung gezeigt wird, können die Zentrierbalken 87 eine Zustellbewegung ausführen. Hierdurch werden Verpackungszuschnitte von solchen Stapeln 50 zentriert, die sich in einer gemeinsamen Ebene befinden bzw. die auf gleicher Höhe angeordnet sind. Nachfolgend werden die Zentrierbalken 87 in Richtung nach unten bewegt und befinden sich sodann in vertikaler Richtung auf der Höhe einer weiteren Ebene mehrerer weiterer Stapel 50 an Verpackungszuschnitten.

Durch eine Zentrierbewegung der Zentrierbalken 87 werden auch die Verpackungszuschnitte dieser Stapel 50, die sich in der weiteren Ebene befinden, bündig zueinander ausgerichtet. Die Zentriereinrichtung 85 richtet somit aufeinanderfolgend die Verpackungszuschnitte von Stapeln 50, die sich in einer jeweiligen gemeinsamen Ebene befinden, bündig zueinander aus. Hierdurch kann ein Greiferkopf 10 mehrere Verpackungszuschnitte eines jeweiligen Stapels 50 sicher aufnehmen und klemmend erfassen, da sich die jeweiligen Verpackungszuschnitte an einer jeweiligen erwarteten Soll-Position befinden.

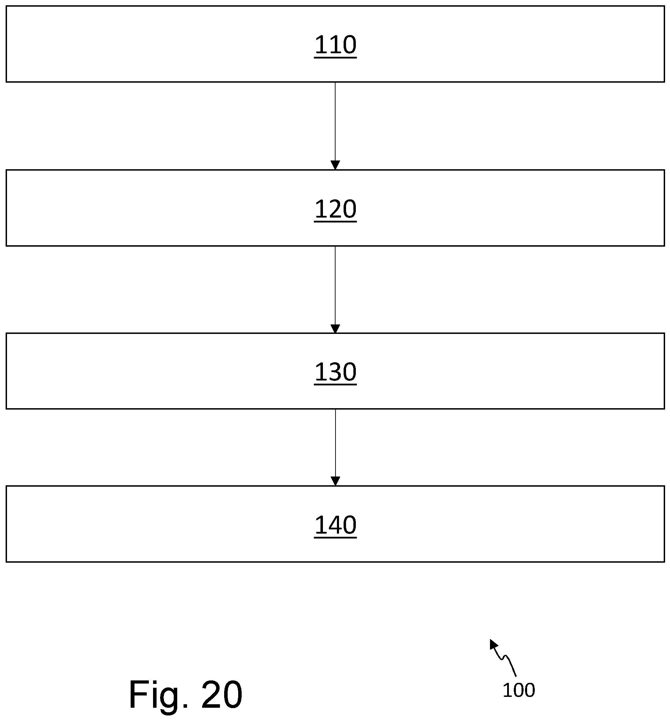

Die Fig. 20 zeigt im Flussdiagramm einzelne Schritte, wie sie in diversen Ausführungsformen des erfindungsgemäßen Verfahrens 100 vorgesehen sein können. Im Schritt 110 taucht ein Greiferkopf 10 über einen als Bestandteil einer Trenneinheit 18 des Greiferkopfes 10 ausgebildeten Vorsprung 34 (vgl. Figuren 3A bis 3C) in einen Stapel 50 an Verpackungszuschnitten ein und hebt mehrere sodann auf dem Vorsprung 34 angeordnete Verpackungszuschnitte über die Trenneinheit 18 an.

Eine geradlinige Hebeachse HA, entlang welcher der Vorsprung 34 hierzu bewegt wird, ist gegenüber einer Kontaktfläche 24 für Verpackungszuschnitte um einen Winkel geneigt, welcher zwischen 5° und 30° beträgt. Insbesondere kann der Winkel 18° oder im Wesentlichen 18° betragen.

Im Schritt 120 wird eine untere Greifeinheit 19 des Greiferkopfes 10 im Bereich der angehobenen Außenkanten in den Stapel 50 an Verpackungszuschnitten eingeführt, so dass die jeweiligen noch klemmend zu erfassenden Verpackungszuschnitte vollständig von der unteren Greifeinheit 19 getragen werden.

Im Schritt 130 werden die von der unteren Greifeinheit 19 vollständig getragenen Verpackungszuschnitte klemmend von der unteren Greifeinheit 19 und einer oberen Greifeinheit 17 des Greiferkopfes 10 erfasst und nachfolgend im Schritt 140 über den Greiferkopf 10 in Richtung eines vorgegebenen Zielortes transportiert. Für die Bewegung des Greiferkopfes 140 kann ein Manipulator 1 vorgesehen sein, bei dem es sich insbesondere um einen Knickarmroboter 1' handeln kann. Am Zielort kann sich eine Verpackungsvorrichtung befinden, an welche die mehreren Verpackungszuschnitte vom Greiferkopf 10 übergeben werden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Manipulator
- 1': Knickarmroboter
- 2: Verpackungssystem
- 3: Adapter
- 4: Linearführung
- 5: Anschlagwand
- 6: Öffnung
- 7: Schlitz
- 8: Blechteil
- 9: Kolben-Zylindereinheit
- 10: Greiferkopf
- 12: Rahmen
- 13: Aktuator
- 14: Tragegestell
- 15: Zange
- 16: Linearaktuator
- 17: Obere Greifeinheit
- 18: Trenneinheit
- 19: Untere Greifeinheit
- 20: Steuer- und/oder Regeleinrichtung
- 23: Kupplung
- 24: Kontaktfläche
- 25: Pneumatikzylinder
- 26: Pneumatikzylinder
- 26': Klemmmittel
- 27: Erste Gabelzinke
- 28: Gabelzinke
- 29: Innere Gabelzinke
- 29': Äußere Gabelzinke
- 30: Schlitten
- 32: Anschlag
- 34: Vorsprung
- 36: Schnittstelle zur Greifeinheit
- 37: Rahmen
- 38: Oberfläche
- 39: Zentrierelement
- 41: Sensorik
- 42: Kolben
- 43: Mattenbahn
- 46: Lager
- 48: Arbeitsarm
- 49: Sauginstrument
- 50: Stapel
- 51: Weiterer Stapel
- 52: Weiterer Stapel
- 53: Weiterer Stapel
- 54: Weiterer Stapel
- 55: Weiterer Stapel
- 56: Weiterer Stapel
- 57: Weiterer Stapel
- 60: Verpackungssystem
- 62: Ablage
- 63: Niederhalter
- 64: Aufstandsfläche
- 67: Schlitz
- 69: Transportband
- 70: Zentriereinrichtung
- 71: Palette
- 72: Drehtisch, erster Drehtisch
- 74: Drehtisch, zweiter Drehtisch
- 80: Versorgungseinrichtung
- 85: Zentriereinrichtung
- 87: Zentrierbalken

- 100: Verfahren
- 110: Verfahrensschritt, erster Verfahrensschritt
- 120: Verfahrensschritt, zweiter Verfahrensschritt
- 130: Verfahrensschritt, dritter Verfahrensschritt
- 140: Verfahrensschritt, vierter Verfahrensschritt

- HA: Hebeachse
- L: Lücke
- S: Zentrale Steuerung

## Patentansprüche

1. Greiferkopf (10) zum Handhaben von Verpackungszuschnitten, umfassend
- eine obere Greifeinheit (17) und eine unteren Greifeinheit (19), die zum gemeinsamen klemmenden Erfassen jeweils mehrerer Verpackungszuschnitte von einem Stapel (50) mit einer Vielzahl an Verpackungszuschnitten ausgebildet sind, sowie
- eine Trenneinheit (18), welche zum Anheben von Außenkanten jeweiliger zum klemmenden Erfassen vorgesehener Verpackungszuschnitte gegenüber auf dem Stapel (50) verbleibenden Verpackungszuschnitten ausgebildet ist, so dass die untere Greifeinheit (19) im Bereich der angehobenen Außenkanten in den Stapel (50) an Verpackungszuschnitten einführbar ist,
wobei vorgesehen ist, dass die Trenneinheit (18) zum Anheben der Außenkanten einen Linearaktuator (16) umfasst, welcher derart angeordnet ist, dass seine geradlinige Hebeachse (HA) gegenüber einer durch die untere Greifeinheit (19) ausgebildeten Kontaktfläche (24) für Verpackungszuschnitte geneigt ist, wenn die Trenneinheit (18) über den mindestens einen Linearaktuator (16) die Außenkanten der jeweiligen Verpackungszuschnitte anhebt.

2. Greiferkopf (10) nach Anspruch 1, bei dem die geradlinige Hebeachse (HA) gegenüber der Kontaktfläche (24) um einen Winkel geneigt ist, welcher zwischen 5° und 30°, insbesondere zwischen 10° und 25° und vorzugsweise zwischen 15° und 20° beträgt.

3. Greiferkopf (10) nach Anspruch 1 oder Anspruch 2, bei dem die obere Greifeinheit (17) wenigstens zwei parallel zueinander orientierte Gabelzinken (27) umfasst und/oder bei dem die untere Greifeinheit (19) wenigstens zwei parallel zueinander orientierte Gabelzinken (29, 29') umfasst und bei welchem Greiferkopf (10) insbesondere vorgesehen ist, dass die untere Greifeinheit (19) zwei äußere Gabelzinken (29') und zwei innere Gabelzinken (29) umfasst, wobei die zwei äußeren Gabelzinken (29') und/oder die zwei inneren Gabelzinken (29) derart verstellbar sind, dass die zwei äußeren Gabelzinken (29) mit den zwei inneren Gabelzinken (29) in eine gemeinsame Ebene gebracht werden können.

4. Greiferkopf (10) nach einem der Ansprüche 1 bis 3, bei dem die obere Greifeinheit (17) und/oder die untere Greifeinheit (19) an einer Geradführung angeordnet sind, wobei die obere Greifeinheit (17) und/oder die untere Greifeinheit (19) zum klemmenden Erfassen der jeweiligen mehreren Verpackungszuschnitte entlang der Geradführung bewegbar ist/sind.

5. Greiferkopf (10) nach einem der Ansprüche 1 bis 4, bei dem die obere Greifeinheit (17) zum klemmenden Erfassen der jeweiligen mehreren Verpackungszuschnitte schwenkbar ausgebildet ist.

6. Greiferkopf (10) nach einem der Ansprüche 1 bis 5, bei dem die Trenneinheit (18) an der unteren Greifeinheit (19) angeordnet ist oder bei dem die Trenneinheit (18) an der oberen Greifeinheit (17) angeordnet ist.

7. Greiferkopf (10) nach einem der Ansprüche 1 bis 6, bei welchem die Trenneinheit (18) über einen Schlitten (30) verfügt, an dem der mindestens eine Linearaktuator (16) angeordnet ist, wobei der Schlitten (30) entlang einer Führung des Greiferkopfes (10) zusammen mit dem mindestens einen Linearaktuator (16) geradlinig bewegbar ist.

8. Greiferkopf (10) nach einem der Ansprüche 1 bis 7, bei dem die Trenneinheit (18) über einen Anschlag (32) verfügt, der über den mindestens einen Linearaktuator (16) bewegbar und zum bündigen Ausrichten von Außenkanten der zum jeweiligen klemmenden Erfassen vorgesehenen Verpackungszuschnitte ausgebildet ist, wobei vorzugsweise vorgesehen ist, dass der Anschlag (32) derart mit dem mindestens einen Linearaktuator (16) verbunden ist, dass der Anschlag (32) in Gegenrichtung der Außenkanten geneigt ist, wenn der Anschlag (32) die Außenkanten der zum jeweiligen klemmenden erfassen vorgesehenen Verpackungszuschnitte bündig ausrichtet und/oder bei welchem Greiferkopf (10) vorzugsweise vorgesehen ist, dass der Anschlag (32) über den mindestens einen Linearaktuator (16) derart bewegbar ist, dass der Anschlag (32) während des Anhebens der Außenkanten eine in Gegenrichtung der Außenkanten orientierte Neigungsbewegung ausführt.

9. Greiferkopf (10) nach einem der Ansprüche 1 bis 8, bei welchem die Trenneinheit (18) zum Anheben der Außenkanten der jeweiligen zum klemmenden Erfassen vorgesehenen Verpackungszuschnitte einen Vorsprung (34) umfasst, der mittels des mindestens einen Linearaktuators (16) entlang der geradlinigen Hebeachse (HA) bewegbar ist.

10. Greiferkopf (10) nach einem der Ansprüche 1 bis 9, welcher Greiferkopf (10) mindestens ein Sauginstrument (49) besitzt, welches derart ausgebildet ist, dass der Greiferkopf (1) über das mindestens eine Sauginstrument (49) alternativ zu einer klemmenden Erfassung jeweils mehrerer Verpackungszuschnitte einen Verpackungszuschnitt insbesondere pneumatisch entgegennehmen kann.

11. Greiferkopf (10) nach Anspruch 10, wobei eine Position des mindestens einen Sauginstrumentes (49) aktuatorisch verstellbar ist.

12. Manipulator (1), mit dem mindestens ein Greiferkopf (10) zur Handhabung von Verpackungszuschnitten nach einem der Ansprüche 1 bis 11 verbunden ist, wobei es sich bei dem Manipulator (1) insbesondere um einen Knickarmroboter (1') handelt.

13. Verpackungssystem (60), umfassend eine Versorgungseinrichtung (80) zur Aufnahme mindestens eines Stapels (50) an flächigen Verpackungszuschnitten, mindestens einen Manipulator (1) gemäß Anspruch 12 sowie eine Verpackungsvorrichtung zum Verpacken von Artikeln mit Verpackungszuschnitten, wobei sich die Versorgungseinrichtung (80) und die Verpackungsvorrichtung in einem Arbeitsbereich des mindestens Manipulators (1) befinden und wobei der mindestens eine Manipulator (1) zur Übergabe jeweiliger über seinen Greiferkopf (10) jeweils klemmend erfasster Verpackungszuschnitte an die Verpackungsvorrichtung ausgebildet ist.

14. Verfahren (100) zur Handhabung von Verpackungszuschnitten über einen Greiferkopf (10), der eine untere Greifeinheit (19) und eine obere Greifeinheit (17) sowie eine Trenneinheit (18) besitzt, wobei ein Stapel (50) an Verpackungszuschnitten bereitgestellt wird und der Greiferkopf (10) mittels einer durch mindestens einen Linearaktuator (16) der Trenneinheit (18) bewirkten Hebebewegung, die entlang einer geradlinien Hebeachse (HA) erfolgt, welche geradlinige Hebeachse (HA) gegenüber einer durch die untere Greifeinheit (19) ausgebildeten Kontaktfläche (24) für Verpackungszuschnitte geneigt ist, Außenkanten jeweiliger klemmend entgegenzunehmender Verpackungszuschnitte gegenüber weiteren auf dem Stapel (50) verbleibenden Verpackungszuschnitten anhebt, worauf folgend die untere Greifeinheit (19) im Bereich der angehobenen Außenkanten in den Stapel (50) an Verpackungszuschnitten eingeführt wird und die in den Stapel (50) eingeführte untere Greifeinheit (19) zusammen mit der oberen Greifeinheit (17) hierauf folgend die jeweiligen Verpackungszuschnitte klemmend erfasst und der Greiferkopf (10) zusammen mit den klemmend erfassten Verpackungszuschnitten in Richtung eines vorgegebenen Zielortes bewegt wird.

15. Verfahren (100) nach Anspruch 14, bei welchem mit dem mindestens einen Linearaktuator (16) ein Anschlag (32) in Verbindung steht, wobei der Greiferkopf (10) vor einem Anheben der Außenkanten in Richtung der jeweiligen klemmend zu erfassenden Verpackungszuschnitte bewegt wird, so dass der Anschlag (32) mit den noch anzuhebenden Außenkanten in Oberflächenkontakt tritt und die Außenkanten der noch anzuhebenden Verpackungszuschnitte bündig oder im Wesentlichen bündig zueinander ausrichtet.

16. Verfahren (100) nach Anspruch 15, bei welchem
- der Anschlag (32) mittels einer Rückhubbewegung des mindestens einen Linearaktuators (16) in Gegenrichtung der jeweiligen Verpackungszuschnitte geneigt wird, während die Außenkanten der jeweiligen Verpackungszuschnitte über die Trenneinheit (18) angehoben werden und/oder bei welchem Verfahren
- der Anschlag (32) derart mit dem Linearaktuator (16) verbunden ist, dass der Anschlag (32) während des bündigen oder im Wesentlichen bündigen Ausrichtens der jeweiligen Außenkanten in Gegenrichtung der Außenkanten geneigt ist.

17. Verfahren (100) nach Anspruch 15 oder Anspruch 16, bei welchem eine Anschlagwand (5) vorgesehen ist, in Richtung welcher Anschlagwand (5) der Anschlag (32) des Greiferkopfes (10) die jeweiligen klemmend zu erfassenden Verpackungszuschnitte drückt und hierbei die Außenkanten der noch anzuhebenden Verpackungszuschnitte bündig oder im Wesentlichen bündig zueinander ausrichtet.

18. Verfahren nach einem der Ansprüche 14 bis 17, bei dem die untere Greifeinheit (19) mindestens zwei innere Gabelzinken (29) und mindestens zwei äußere Gabelzinken (29`) umfasst, wobei lediglich die mindestens zwei inneren Gabelzinken (29) im Bereich der angehobenen Außenkanten in den Stapel (50) eingeführt werden und die jeweiligen klemmend zu erfassenden Verpackungszuschnitte aufnehmen, so dass die jeweiligen klemmend zu erfassenden Verpackungszuschnitte vollständig von den mindestens zwei inneren Gabelzinken (29) getragen werden, wobei hierauf folgend die mindestens zwei äußeren Gabelzinken (29`) mit einem jeweiligen bereits aufgenommenen unteren Verpackungszuschnitt in Anlage gebracht und die jeweiligen klemmend zu erfassenden Verpackungszuschnitte hierdurch sowohl von den mindestens zwei inneren Gabelzinken (29) als auch von den mindestens zwei äußeren Gabelzinken (29`) getragen werden.

19. Verfahren nach einem der Ansprüche 14 bis 18, bei welchem die untere Greifeinheit (19) im Bereich der angehobenen Außenkanten in den Stapel (50) an Verpackungszuschnitten eingeführt wird und die jeweiligen klemmend zu erfassenden Verpackungszuschnitte vollständig oder teilweise aufnimmt, so dass die jeweiligen klemmend zu erfassenden Verpackungszuschnitte vollständig oder teilweise von der unteren Greifeinheit (19) getragen werden und wobei mindestens ein als Bestandteil des Greiferkopfes (10) ausgebildetes Zentrierelement (39) bewegt wird und die mehreren vollständig oder teilweise aufgenommenen Verpackungszuschnitte bündig zueinander ausrichtet.

20. Verfahren nach einem der Ansprüche 14 bis 19, bei dem der Greiferkopf (10) mindestens ein Sauginstrument (49) umfasst, über das der Greiferkopf (10) einen letzten Verpackungszuschnitt des bis dahin ausgebildeten Stapels (50) an Verpackungszuschnitten pneumatisch entgegennimmt, woraufhin der Greiferkopf (10) den pneumatisch aufgenommenen Verpackungszuschnitt in Richtung eines vorgegebenen Zielortes transportiert.
